(19) Europäisches Patentamt
European Patent Office
Office européen des brevets

(11) EP 2 471 879 B1

(12) **EUROPEAN PATENT SPECIFICATION**

(45) Date of publication and mention of the grant of the patent:
**25.01.2017 Bulletin 2017/04**

(51) Int Cl.:
***C09D 11/101*** *(2014.01)* ***C09D 11/40*** *(2014.01)*
***C09D 11/322*** *(2014.01)*

(21) Application number: **11195177.8**

(22) Date of filing: **22.12.2011**

(54) **Ink set for inkjet recording, inkjet recording method, and printed material**

Tintensatz zur Tintenstrahlaufzeichnung, Tintenstrahlaufzeichnungsverfahren und gedrucktes Material

Jeu d'encre pour enregistrement à jet d'encre, procédé d'enregistrement à jet d'encre et matériau imprimé

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2010 JP 2010292301**

(43) Date of publication of application:
**04.07.2012 Bulletin 2012/27**

(73) Proprietor: **Fujifilm Corporation**
**Minato-ku**
**Tokyo (JP)**

(72) Inventor: **Fujii, Yuusuke**
**Kanagawa (JP)**

(74) Representative: **Hoffmann Eitle**
**Patent- und Rechtsanwälte PartmbB**
**Arabellastraße 30**
**81925 München (DE)**

(56) References cited:
**EP-A1- 1 964 893**
**EP-A1- 2 042 572**
**US-A1- 2003 234 848**
**US-A1- 2004 099 170**
**US-A1- 2008 225 099**
**US-A1- 2009 291 225**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention relates to an ink set for inkjet recording, an inkjet recording method, and a printed material.

As image recording methods for forming an image on a recording medium such as paper based on an image data signal, there are an electrophotographic system, sublimation type and melt type thermal transfer systems, an inkjet system, etc.

With regard to the inkjet system, the printing equipment is inexpensive, it is not necessary to use a plate when printing, and since an image is formed directly on a recording medium by discharging an ink composition only on a required image area, the ink composition can be used efficiently and the running cost is low, particularly in the case of small lot production. Furthermore, there is little noise and it is excellent as an image recording system, and has been attracting attention in recent years.

Among them, an inkjet recording ink composition (radiation-curing inkjet recording ink composition), which is curable upon exposure to radiation such as UV rays, is an excellent system from the viewpoint of it being possible to print on various types of recording media because, compared with a solvent-based ink composition, the drying properties are excellent and an image is resistant to spreading since the majority of the components in the ink composition cure upon exposure to radiation such as UV rays.

As a method for improving gradation and graininess of an ink composition, a technique using a dark color ink and a light color ink is known.

JP-A-2008-208190 (JP-A denotes a Japanese unexamined patent application publication) discloses an ink composition that comprises (A) a pigment, (B) a polymerizable monomer, (C) a polymerization initiator, and (D) a dispersant, the content of the pigment being no greater than 1 wt% of the entire ink composition, and the ratio by weight (D/A) of pigment A and dispersant D in the ink composition satisfying the relationship $0.5 < D/A \leq 15$.

It is an object of the present invention to provide an ink set for inkjet recording that has excellent curing sensitivity, gives excellent adhesion of an obtained cured film to a recording medium, and gives a high image-quality image having excellent hue and reduced graininess. It is another object of the present invention to provide an inkjet recording method employing the ink set for inkjet recording and a printed material obtained by the inkjet recording method.

The 'graininess' referred to here means image noise, and an image having reduced graininess is excellent in terms of uniform feel and has high image quality.

The objects of the present invention have been accomplished by means described in <1>, <9> <11>, or <12> below. They are described together with <2> to <8> and <10>, which are preferred embodiments.

<1> An ink set for inkjet recording comprising at least one dark color ink composition and light color ink composition pair having the same hue, the dark color ink composition and the light color ink composition all comprising (Component A) a pigment, (Component B) a radically polymerizable compound, and (Component C-1) a thioxanthone-based polymerization initiator, the ratio by weight of the pigment and the thioxanthone-based polymerization initiator in the dark color ink composition being 4:1 to 1:1, and the ratio by weight of the pigment and the thioxanthone-based polymerization initiator in the light color ink composition being 1:1 to 1:8,

<2> the ink set for inkjet recording according to <1>, wherein the dark color ink composition has a color selected from the group consisting of yellow, cyan, magenta, black, and white, and the light color ink composition having the same hue has a color of cyan and/or magenta,

<3> the ink set for inkjet recording according to <1> or <2>, wherein the pigment in the light color ink composition has a content of no greater than 1 wt%,

<4> the ink set for inkjet recording according to any one of <1> to <3>, wherein the dark color ink composition and the light color ink composition all comprise, as the polymerization initiator (Component C), (Component C-1) a thioxanthone-based polymerization initiator, (Component C-2) an $\alpha$-aminoalkylphenone compound, and (Component C-3) an acylphosphine oxide compound, the contents (c1), (c2), and (c3) of Component C-1, Component C-2, and Component C-3 in the ink composition satisfying $(c1) \leq (c2) + (c3)$,

<5> the ink set for inkjet recording according to any one of <1> to <4>, wherein the dark color ink composition and the light color ink composition all comprise as the radically polymerizable compound an *N*-vinylcaprolactam at at least 10 wt% of the entire ink composition,

<6> the ink set for inkjet recording according to any one of <1> to <5>, wherein the dark color ink composition and the light color ink composition all comprise as the radically polymerizable compound an aromatic hydrocarbon group-containing monofunctional (meth)acrylate compound,

<7> the ink set for inkjet recording according to any one of <1> to <6>, wherein the dark color ink composition and the light color ink composition all comprise as the radically polymerizable compound a compound represented by Formula (b-3) below,

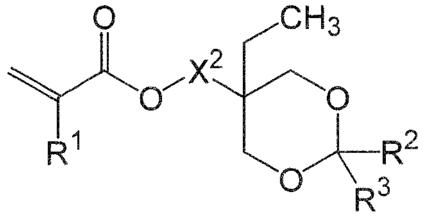

(b-3)

wherein $R^1$, $R^2$, and $R^3$ independently denote a hydrogen atom, a methyl group, or an ethyl group, and $X^2$ denotes a single bond or a divalent linking group,

<8> the ink set for inkjet recording according to any one of <1> to <7>, wherein the content of the pigment in the light color ink composition is 1 to 80 wt% relative to the content of the pigment in the dark color ink composition having the same hue,

<9> an inkjet recording method comprising a step of discharging onto a recording medium an ink composition constituting the ink set for inkjet recording according to any one of <1> to <8>, and a step of curing the ink composition by irradiating the discharged ink composition with actinic radiation using a UV light-emitting diode,

<10> the inkjet recording method according to <9>, wherein the UV light-emitting diode has an emission peak wavelength in the range of 380 to 420 nm and has a maximum illumination intensity on the recording medium surface of 10 to 2,000 mW/cm$^2$, and

<11> a printed material recorded by the inkjet recording method according to <9> or <10>,

<12> use of the ink set of any one of <1> to <8> as an ink set for inkjet recording.

In accordance with the present invention, there can be provided an ink set for inkjet recording that has excellent curing sensitivity, gives excellent adhesion of an obtained cured film to a recording medium, and gives a high image-quality image having excellent hue and reduced graininess. There can also be provided an inkjet recording method employing the ink set for inkjet recording and a printed material obtained by the inkjet recording method.

The present invention is explained in detail below.

In the present invention, the description 'A to B' expressing a range of numerical values means 'not less than A but not more than B'. That is, it expresses a range of numerical values that includes the endpoints A and B.

Furthermore, 'an ink set for inkjet recording' is also simply called 'an ink set', 'a dark color ink composition' is simply called 'a dark color ink', 'a light color ink composition' is also simply called 'light color ink', and 'a radically polymerizable compound' is also simply called 'a polymerizable compound'. '(Component A) a pigment' etc. is also called 'Component A' etc. as appropriate.

With regard to the description of groups (atomic groups) in the present specification, when they are not described as being substituted or unsubstituted, both ones with a substituent and ones without a substituent are included. For example, an 'alkyl group' includes both an alkyl group having no substituent (unsubstituted alkyl group) and an alkyl group having a substituent (substituted alkyl group).

I. Ink set for inkjet recording

The ink set for inkjet recording of the present invention comprises at least one dark color ink composition and light color ink composition pair having the same hue, the dark color ink composition and the light color ink composition all comprising (Component A) a pigment, (Component B) a radically polymerizable compound, and (Component C-1) a thioxanthone-based polymerization initiator, the ratio by weight of the pigment and the thioxanthone-based polymerization initiator in the dark color ink composition being 4:1 to 1:1, and the ratio by weight of the pigment and the thioxanthone-based polymerization initiator in the light color ink composition being 1:1 to 1:8.

The ink composition constituting the ink set for inkjet recording of the present invention is explained in detail below.

The ink composition constituting the ink set for inkjet recording of the present invention comprises at least one dark color ink and light color ink pair having the same hue. The 'same hue' referred to here means that ink compositions used when carrying out multi-color inkjet recording have the same hue. That is, inks of each of the three primary colors of the subtractive color process, comprising cyan (C), magenta (M), and yellow (Y), have the same hue, special color inks such as orange, green, or violet have the same hue, or black (B) inks, which are achromatic color inks, have the same hue, and they may have substantially the same color. Furthermore, a dark color black ink and a gray color ink, which is substantially achromatic, may form a pair. A white (W) ink is not covered by an ink composition pair having the same hue.

The hue of the ink composition pair constituted by a dark color ink and a light color ink is preferably selected from CMYB, which show conspicuous graininess when forming an image, and more preferably C and/or M, which show

particularly conspicuous graininess.

The ink set of the present invention comprises at least two types having the same hue but different pigment concentrations, that is, a dark color ink and a light color ink, as a pair. It may comprise three or more types of ink compositions having different concentrations.

Furthermore, for an ink having a hue that does not constitute a dark color ink and light color ink pair, an ink set for inkjet recording comprising an ink composition having a normal concentration is preferably used. In order to form a full color image in particular, an ink set comprising the four colors CMYB is preferable.

In the present invention, the color of the dark color ink is preferably selected from the group consisting of yellow, cyan, magenta, black, and white. The color of the light color ink having the same hue is preferably selected from yellow, cyan, magenta, and black; among them cyan and/or magenta, which show particularly conspicuous graininess, are more preferable, and the color of the light color ink having the same hue is yet more preferably cyan and magenta.

When the color of the light color ink having the same hue is cyan, the entire ink set comprises ink compositions having dark and light cyan colors as well as a dark color ink selected from the group consisting of yellow, magenta, black, and white. In this case, the ink set preferably comprises, in addition to the dark and light cyan ink compositions, at least a yellow ink, a magenta ink, and a black ink as dark color inks, and more preferably a yellow ink, a magenta ink, a black ink, and a white ink.

In the present invention, a seven color ink set comprising as dark color inks a yellow ink, a cyan ink, a magenta ink, a black ink, and a white ink and as light color inks a magenta ink and a cyan ink is particularly preferable.

The dark color ink and the light color ink having the same hue all comprise (Component A) a pigment, (Component B) a radically polymerizable compound, and (Component C-1) a thioxanthone-based polymerization initiator.

The ratio by weight (pigment:thioxanthone-based polymerization initiator (ratio by weight)) of the pigment (Component A) and the thioxanthone-based polymerization initiator (Component C-1) in the dark color ink is 4:1 to 1:1.

When the ratio by weight exceeds 4:1, it is difficult to obtain sufficient curability. When the ratio by weight is less than 1:1, there is degradation in hue, such as an obtained image turning yellow.

The ratio by weight of the pigment (Component A) and the thioxanthone-based polymerization initiator (Component C-1) in the dark color ink is preferably 3.5:1 to 1:1, and more preferably 3:1 to 1:1.

Furthermore, the ratio by weight (pigment:thioxanthone-based polymerization initiator (ratio by weight)) of the pigment (Component A) and the thioxanthone-based polymerization initiator (Component C-1) in the light color ink is 1:1 to 1:8.

When the ratio by weight exceeds 1:1, it is difficult to obtain sufficient curability. When the ratio by weight is less than 1:8, there is degradation in hue, such as an obtained image turning yellow.

The ratio by weight of the pigment (Component A) and the thioxanthone-based polymerization initiator (Component C-1) in the light color ink is preferably 1:1 to 1:7, and more preferably 1:1 to 1:6.

In the present invention, when the ink set has two or more dark color ink and light color ink pairs, at least one dark and light color ink composition pair may satisfy the above-mentioned content ratio of the pigment and the thioxanthone-based polymerization initiator, but it is preferable for all dark and light color ink composition pairs to satisfy the above-mentioned defined content.

In the present invention, the ink composition is a radiation curing type ink composition. The 'radiation' referred to in the present invention is not particularly limited as long as it is actinic radiation that can provide energy that enables an initiating species to be generated in the ink composition when irradiated, and broadly includes $\alpha$ rays, y rays, X rays, ultraviolet rays (UV), visible light, and an electron beam; among these, ultraviolet rays and an electron beam are preferable from the viewpoint of curing sensitivity and the availability of equipment, and ultraviolet rays are particularly preferable. The ink composition of the present invention is therefore preferably an ink composition that can cure upon exposure to ultraviolet rays as radiation.

In particular, in the present invention, the ink composition is preferably one that cures, using a light-emitting diode that emits UV having an emission peak wavelength in the range of 380 to 420 nm, with high sensitivity toward UV having a maximum illumination intensity of 10 to 2,000 mW/cm$^2$ on the recording medium surface onto which the ink composition has been discharged.

Furthermore, in the present invention, since the ink composition is a radiation curing type ink composition and is cured after the ink composition is applied onto a recording medium, it is preferable for it not to contain a highly volatile solvent and for it to be free from solvent. This is because, if a highly volatile solvent remains in a cured ink image, the solvent resistance is degraded and the VOC (Volatile Organic Compound) problem of residual solvent occurs, which should be suppressed.

The each component comprising the ink composition is explained below.

(Component A) Pigment

The ink composition of the present invention comprises a pigment.

The pigment referred to here generally means a colorant that is sparingly soluble in various types of solvent (organic solvent, water), and in a normal ink composition it means one for which, of the total solids content of the colorant contained in the ink composition, the amount that dissolves in the ink composition is no greater than 10 wt%.

The pigment that can be used in the present invention is not particularly limited, and a known pigment may be used. With regard to the pigment that can be used in the present invention, from the viewpoint of not suppressing sensitivity to a curing reaction by actinic radiation, a compound that does not function as a polymerization inhibitor in a polymerization reaction, which is a curing reaction, is preferably selected.

The pigment that can be used in the present invention is not particularly limited and, for example, organic and inorganic pigments with the Color Index Nos. shown below may be used according to the intended purpose.

Red or magenta pigments: Pigment Red 3, 5, 19, 22, 31, 38, 42, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, and 257, Pigment Violet 3, 19, 23, 29, 30, 37, 50, and 88, and Pigment Orange 13, 16, 20, and 36.

Blue or cyan pigments: Pigment Blue 1, 15, 15:1, 15:2, 15:3, 15:4, 15:6, 16, 17-1, 22, 27, 28, 29, 36, and 60.

Green pigments: Pigment Green 7, 26, 36, and 50.

Yellow pigments: Pigment Yellow 1, 3, 12, 13, 14, 17, 34, 35, 37, 55, 74, 81, 83, 93, 94, 95, 97, 108, 109, 110, 120, 137, 138, 139, 153, 154, 155, 157, 166, 167, 168, 180, 185, and 193.

Black pigments: Pigment Black 7, 28, and 26.

White pigments: Pigment White 6, 18, and 21.

Furthermore, specific examples of the pigment that can preferably be used in the present invention include IRGALITE BLUE GLVO (cyan pigment, manufactured by Ciba Specialty Chemicals), CINQUASIA MAGENTA RT-335 D (magenta pigment, manufactured by Ciba Specialty Chemicals), NOVOPERM YELLOW H2G (yellow pigment, manufactured by Clariant), SPECIAL BLACK 250 (black pigment, manufactured by Ciba Specialty Chemicals), KRONOS 2300 (white pigment, manufactured by KRONOS), and Tipaque CR60-2 (white pigment, manufactured by Ishihara Sangyo Kaisha Ltd.).

It is preferable that the pigment that can be used in the present invention is mixed with a dispersant and dispersed in a polymerizable compound (polymerizable monomer) or is dispersed after mixing the polymerizable monomer and the dispersant. For dispersion of the pigment, for example, a dispersing machine such as a ball mill, a sand mill, an attritor, a roll mill, an agitator, a Henschel mixer, a colloidal mill, an ultrasonic homogenizer, a pearl mill, a wet type jet mill, or a paint shaker may be used.

The pigment may be directly mixed with another component when preparing an ink composition or, in order to improve dispersion properties, it may be mixed after being added in advance to a dispersion medium such as a solvent or a polymerizable compound (a polymerizable monomer) used in the present invention and uniformly dispersing or dissolving it.

In the present invention, in order to prevent degradation of solvent resistance when there is residual solvent in a cured image and prevent the VOC (Volatile Organic Compound) problem due to residual solvent, the pigment is preferably added to a dispersion medium such as a polymerizable compound (a polymerizable monomer) and then mixed. When only taking dispersion suitability into consideration, it is preferable to select a polymerizable compound having the low viscosity as the polymerizable compound (polymerizable monomer) used for adding to the pigment.

These pigments may be used by appropriately selecting one type or two or more types according to the intended purpose of the ink composition.

When a pigment that is present as a solid in the ink composition is used, it is preferable for the pigment, the dispersant, and the dispersion medium to be selected and for dispersion conditions and filtration conditions to be set so that the average particle size of pigment particles is preferably 0.005 to 0.5 μm, more preferably 0.01 to 0.45 μm, and yet more preferably 0.015 to 0.4 μm. By such control of particle size, clogging of a head nozzle can be suppressed, and the storage stability, the transparency, and the curing sensitivity of the ink composition can be maintained.

In the present invention, the content of the pigment in each dark color ink composition excluding white is preferably 0.1 to 20 wt% of the entire ink composition, more preferably 1 to 15 wt%, and yet more preferably 1 to 10 wt%.

In the case of a white dark color ink, it is preferably 10 to 50 wt%, more preferably 10 to 40 wt%, and yet more preferably 12 to 30 wt%.

The content of the pigment in the light color ink composition is preferably no greater than 1.5 wt% of the entire ink composition, more preferably 0.01 to 1 wt%, and yet more preferably 0.1 to 1 wt%.

In particular, for the light color magenta ink, the content of the magenta pigment is preferably 0.5 to 1 wt% of the entire ink composition, and more preferably 0.6 to 1 wt%. For the light color cyan ink, the content of the cyan pigment is preferably 0.1 to 1 wt% of the entire ink composition, and more preferably 0.2 to 1 wt%.

Furthermore, the content of the pigment in the light color ink composition is preferably 1 to 80 wt% relative to the content of the pigment in the dark color ink composition having the same hue, more preferably 2 to 60 wt%, yet more preferably 3 to 50 wt%, and particularly preferably 5 to 30 wt%.

(Component B) Radically polymerizable compound

In the present invention, each of the dark and light ink compositions comprises (Component B) a radically polymerizable compound.
The radically polymerizable compounds are compounds having at least one radically polymerizable ethylenically unsaturated bond, may be any compound as long as it has one radically polymerizable ethylenically unsaturated bond in the molecule, and include chemical configurations such as monomer, oligomer, and polymer. Among them, the radically polymerizable compounds having chemical configurations such as oligomer and polymer are preferable.
The radically polymerizable compounds may be used singly or may be used in a combination of two or more types at any ratio in order to improve desired properties.
Among them, in the present invention, the ink composition preferably comprises a radically polymerizable compound selected from the group consisting of a (meth)acrylate compound, a vinyl ether compound, and an *N*-vinyl compound. The radically polymerizable compound is preferably a radically polymerizable compound selected from the group consisting of a (meth)acrylate compound, a vinyl ether compound, and an *N*-vinyl compound, and more preferably an *N*-vinyl compound and a (meth)acrylate compound. When both or one of 'acrylate' and 'methacrylate' are referred to, it might be expressed as '(meth)acrylate', and when both or one of 'acrylic' and 'methacrylic' are referred to, it might be expressed as '(meth)acrylic'.
From the viewpoint of curability and adhesion, it is preferable for Component B to comprise at least (Component B-1) an *N*-vinyllactam.
From the viewpoint of adhesion, the content of the *N*-vinyllactam (Component B-1) in the ink composition of the present invention is preferably at least 10 wt% relative to the total weight of the ink composition.
Furthermore, from the viewpoint of curability, it is preferable for Component B to comprise at least (Component B-2) an aromatic hydrocarbon group-containing monofunctional (meth)acrylate compound.
Moreover, from the viewpoint of curability and adhesion, it is preferable for Component B to comprise at least (Component B-3) a compound represented by Formula (b-3), which is described later.
Each thereof is explained below.

(Component B-1) *N*-vinyllactam

The ink composition of the present invention preferably comprises at least (Component B-1) an *N*-vinyllactam from the viewpoint of curability and adhesion. The *N*-vinyllactam (Component B-1) preferably comprises a compound represented by Formula (b-1).

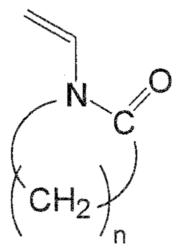

(b - 1)

In Formula (b-1), n denotes an integer of 2 to 6; n is preferably an integer of 3 to 6 from the viewpoint of flexibility after the ink composition is cured, adhesion to a recording medium, and ready availability of starting materials, n is more preferably 3 or 5, and n is particularly preferably 5, which is *N*-vinylcaprolactam. *N*-vinylcaprolactam is preferable since it has excellent safety, is commonly used and is readily available at a relatively low price, and gives particularly good ink curability and adhesion of a cured film to a recording medium.
It is preferable to use the *N*-vinyllactam other than the compound represented by Formula (b-1) which has a substituent such as an alkyl group or an aryl group on the lactam ring or has a saturated or unsaturated ring bonded to the structure.
The compound represented by Formula (b-1) may be used singly or in a combination of two or more compounds.
The content of the *N*-vinyllactam (Component B-1) in the ink composition of the present invention is preferably at least 10 wt% relative to the total weight of the ink composition, more preferably 10 to 60 wt%, and yet more preferably 15 to 35 wt%. When the content is at least 10 wt%, the adhesion to a recording medium is excellent, and when the content is no greater than 60 wt%, the storage stability is excellent.

(Component B-2) Aromatic hydrocarbon group-containing monofunctional (meth)acrylate compound

The ink composition of the present invention preferably comprises (Component B-2) an aromatic hydrocarbon group-containing monofunctional (meth)acrylate compound.

As Component B-2, one having a molecular weight of no greater than 500 is preferable, and one having a molecular weight of no greater than 300 is more preferable.

Examples of Component B-2 include aromatic monofunctional radically polymerizable monomers described in paragraphs 0048 to 0063 of JP-A-2009-96985. In the present invention, as the aromatic hydrocarbon group-containing monofunctional (meth)acrylate compound, a compound represented by Formula (b-2) is preferable.

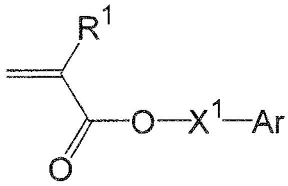

(b - 2)

(In Formula (b-2), $R^1$ denotes a hydrogen atom or a methyl group, $X^1$ denotes a divalent linking group, and Ar denotes a monovalent aromatic hydrocarbon group.)

In Formula (b-2), $R^1$ is preferably a hydrogen atom.

$X^1$ denotes a divalent linking group and is preferably an ether bond (-O-), an ester bond (-C(O)O- or -OC(O)-), an amide bond (-C(O)NR'- or -NR'C(O)-), a carbonyl group (-C(O)-), an imino group (-NR'-), an optionally substituted alkylene group having 1 to 15 carbons, or a divalent group formed by combining two or more of the above. R' denotes a hydrogen atom, a straight-chain, branched, or cyclic alkyl group having 1 to 20 carbons, or an aryl group having 6 to 20 carbons. Examples of the substituent include a hydroxy group and a halogen atom.

A portion including $R^1$ and $X^1$ ($H_2C=C(R^1)-C(O)O-X^1-$) may be bonded to any position on the aromatic hydrocarbon structure. Furthermore, from the viewpoint of improving affinity with a colorant, the terminal of $X^1$ that is bonded to the aromatic hydrocarbon group is preferably an oxygen atom, and more preferably an ethereal oxygen atom. $X^1$ in Formula (b-2) is preferably *-(LO)q-. Here, * denotes the position via which it is bonded to the carboxylic acid ester bond of Formula (b-2), q is an integer of 0 to 10, and L denotes an alkylene group having 2 to 4 carbons. q is preferably an integer of 0 to 4, more preferably an integer of 0 to 2, and yet more preferably 1 or 2. (LO)q is preferably an ethylene oxide chain or a propylene oxide chain.

Ar denotes a monovalent aromatic hydrocarbon group.

As the monovalent aromatic hydrocarbon group, a monovalent monocyclic or polycyclic aromatic hydrocarbon group having 1 to 4 rings can be cited, and specific examples thereof include groups formed by removing one hydrogen atom from benzene, naphthalene, anthracene, 1 H-indene, 9H-fluorene, 1H-phenalene, phenanthrene, triphenylene, pyrene, naphthacene, tetraphenylene, biphenylene, *as*-indacene, *s*-indacene, acenaphthylene, fluoranthene, acephenanthrylene, aceanthrylene, chrysene, pleiadene, etc.

Among them, in the present invention, a phenyl group or a naphthyl group is preferable, and a monocyclic aromatic hydrocarbon group, that is, a phenyl group, is more preferable.

The monovalent aromatic hydrocarbon group optionally has a substituent on an aromatic ring.

As the substituent, a halogen atom, a carboxy group, an acyl group having 1 to 10 carbons, a hydroxy group, a substituted or unsubstituted amino group, a thiol group, or a siloxane group, or an optionally substituted hydrocarbon group or heterocyclic group having no greater than 30 carbons in total is preferable.

The substituent may further have a substituent, and examples thereof include a hydroxy group, an alkyl group having 1 to 10 carbons, and an aryl group having 6 to 12 carbons.

When the monovalent aromatic hydrocarbon group has a plurality of substituents, the substituents may be identical to or different from each other.

Furthermore, the monovalent aromatic hydrocarbon group preferably does not have a substituent on the aromatic ring.

Specific preferred examples of Component B-2 include [L-1] to [L-65]. In the present specification, with regard to parts of the compounds, a hydrocarbon chain is represented by a simplified structural formula in which symbols for carbon (C) and hydrogen (H) are omitted.

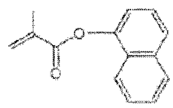 [L-9]

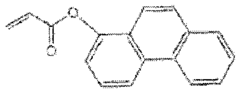 [L-10]

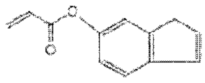 [L-11]

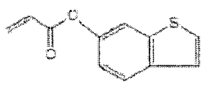 [L-12]

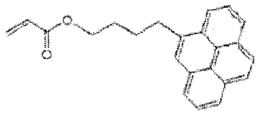 [L-13]

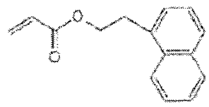 [L-14]

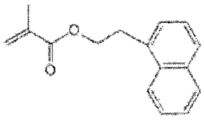 [L-15]

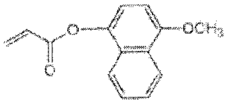 [L-16]

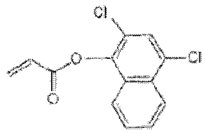 [L-17]

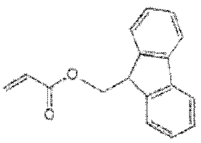 [L-18]

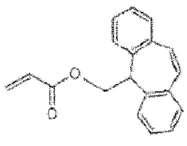 [L-19]

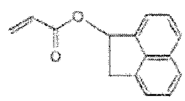 [L-20]

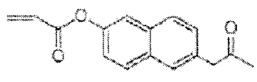 [L-21]

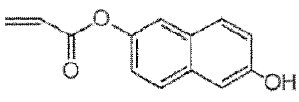 [L-22]

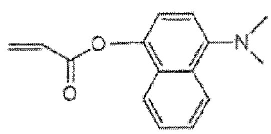 [L-23]

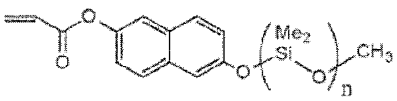 [L-24]

n=1∼5

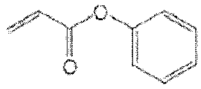 [L-25]

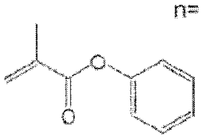 [L-26]

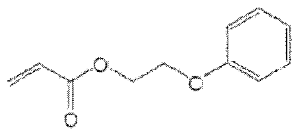 [L-27]

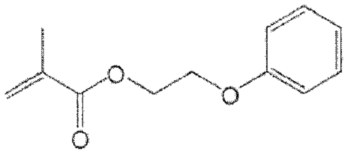 [L-28]

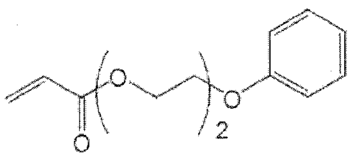 [L-29]

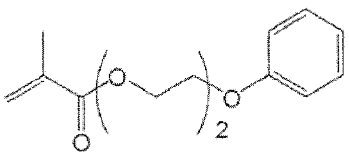 [L-30]

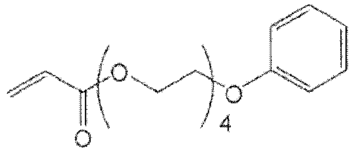 [L-31]

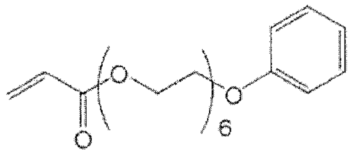 [L-32]

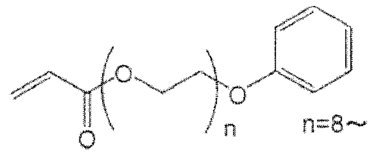 [L-33]

n=8～12

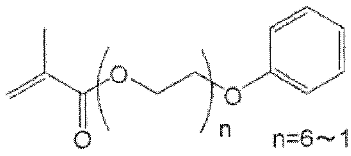 [L-34]

n=6～12

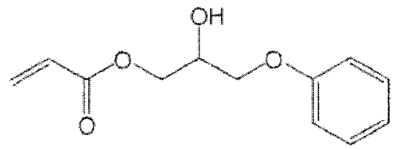 [L-35]

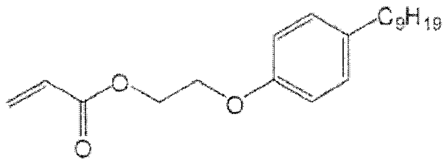 [L-36]

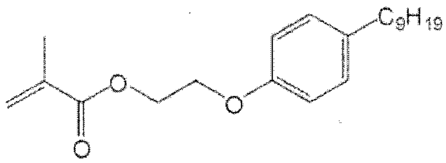 [L-37]

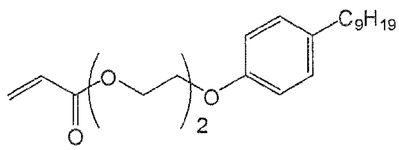 [L-38]

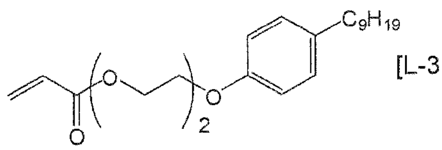 [L-39]

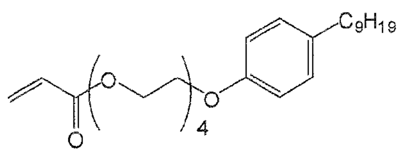 [L-40]

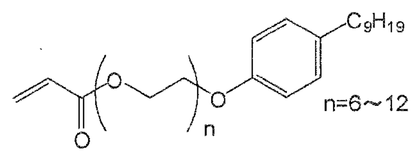 [L-41]

n=6～12

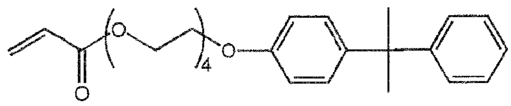 [L-42]

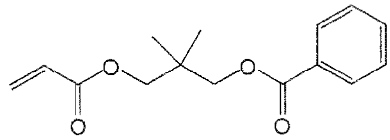 [L-43]

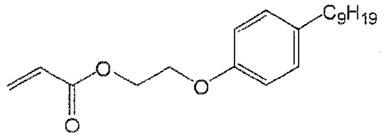 [L-44]

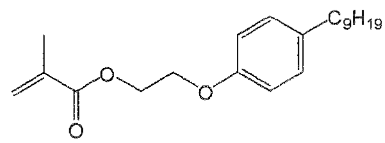 [L-45]

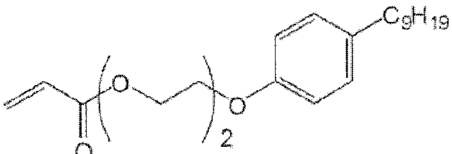 [L-46]

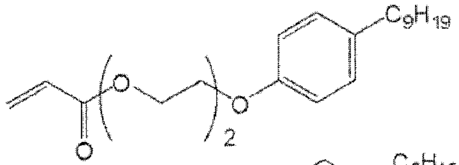 [L-47]

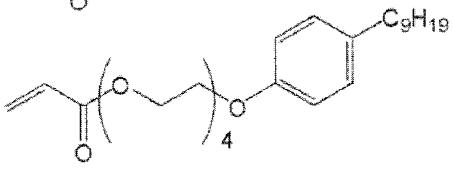 [L-48]

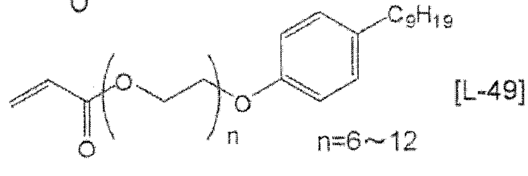 [L-49]

n=6～12

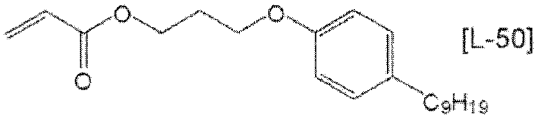
[L-50]

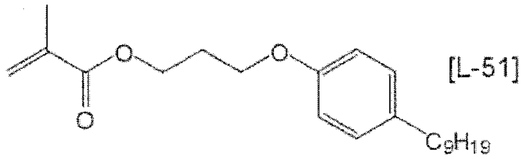
[L-51]

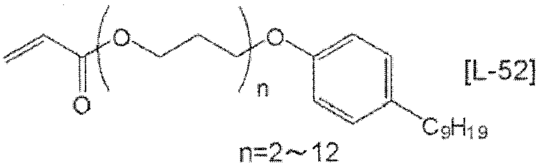
[L-52]

n=2~12

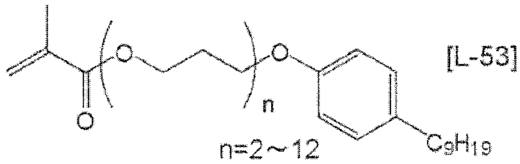
[L-53]

n=2~12

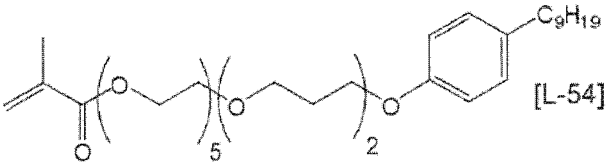
[L-54]

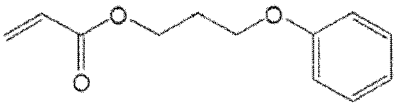
[L-55]

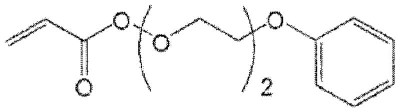
[L-56]

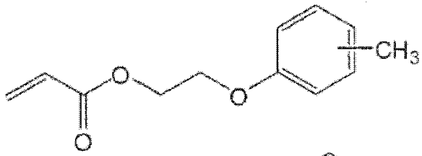
[L-57]

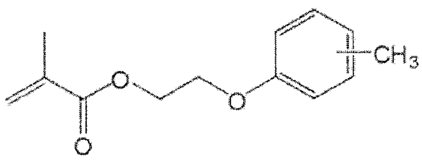
[L-58]

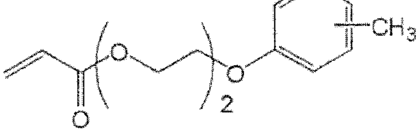
[L-59]

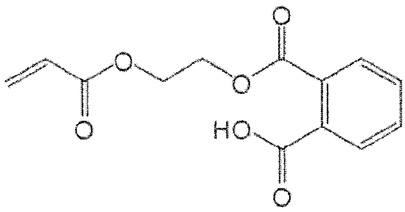
[L-60]

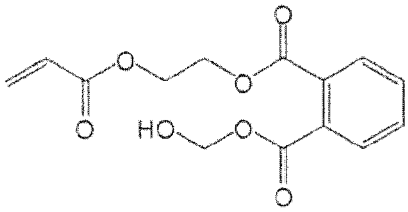
[L-61]

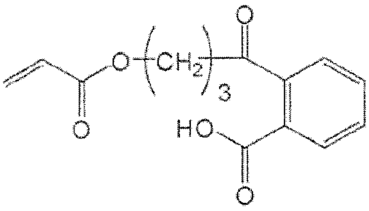
[L-62]

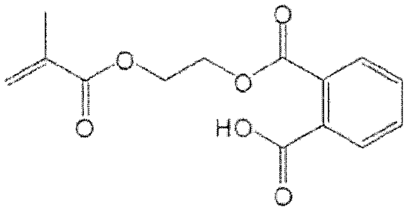
[L-63]

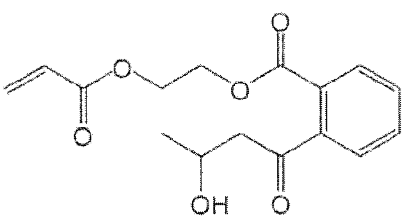
[L-64]

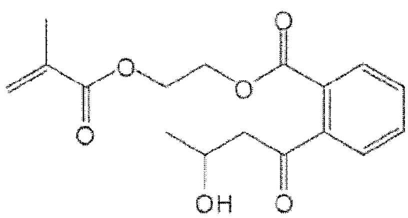
[L-65]

In the present invention, a compound represented by Formula (b-2) is preferably a compound having a phenyl group, more preferably 2-phenoxyethyl (meth)acrylate, or benzyl (meth)acrylate, yet more preferably 2-phenoxyethyl (meth)acrylate, and particularly preferably 2-phenoxyethyl acrylate.

From the viewpoint of inkjet discharge properties and flexibility, the content of Component B-2 is preferably 5 to 60 wt% relative to the weight of the entire ink composition, more preferably 10 to 50 wt%, yet more preferably 15 to 40 wt%, and particularly preferably 20 to 35 wt%.

(Component B-3) Compound represented by Formula (b-3)

The ink composition of the present invention comprises (Component B-3) a compound represented by Formula (b-3).

Due to the ink composition of the present invention comprising the compound represented by Formula (b-3) (Component B-3), excellent adhesion of image to the recording medium (especially polyvinyl chloride, polyethylene terephthalate (PET) or an acrylic resin) can be obtained.

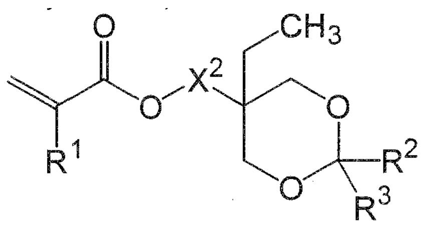

(b - 3)

wherein $R^1$, $R^2$, and $R^3$ independently denote a hydrogen atom, a methyl group, or an ethyl group, and $X^2$ denotes a single bond or a divalent linking group.

$R^1$ is preferably a hydrogen atom or a methyl group, and more preferably a hydrogen atom.

$R^2$ and $R^3$ are independently preferably a hydrogen atom, a methyl group, or an ethyl group, and both of $R^2$ and $R^3$ are more preferably hydrogen atoms.

The divalent linking group denoted by $X^2$ is not particularly limited as long as the effects of the present invention are not greatly impaired; it is preferably a divalent hydrocarbon group or a divalent group in which a hydrocarbon group and an ether bond are combined, and is more preferably a divalent hydrocarbon group, a poly(alkyleneoxy) group, or a poly(alkyleneoxy)alkyl group. Furthermore, the number of carbons of the divalent linking group is preferably 1 to 60, and more preferably 1 to 20.

$X^2$ is preferably a single bond, a divalent hydrocarbon group, or a divalent group in which a hydrocarbon group and an ether bond are combined, more preferably a divalent hydrocarbon group having 1 to 20 carbons, yet more preferably a divalent hydrocarbon group having 1 to 8 carbons, and particularly preferably a methylene group.

Specific examples of Component B-3 are shown below, but are not limited to the examples below. In the specific examples below, R denotes hydrogen atom or methyl group.

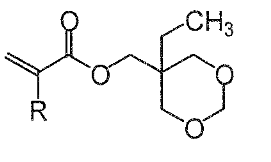
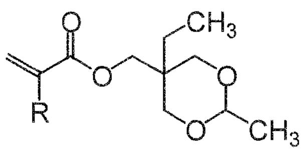
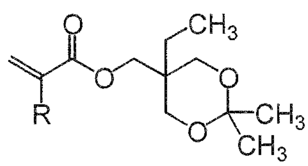

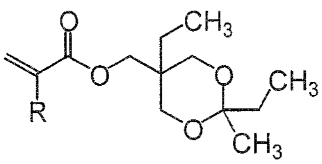
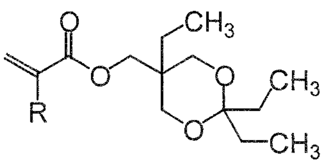
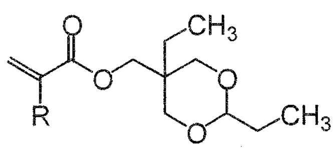

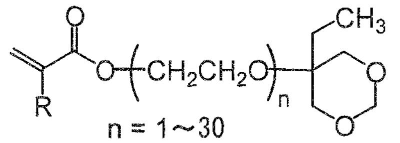

Among them, cyclic trimethylolpropane formal (meth)acrylate is preferable, and cyclic trimethylolpropane formal acrylate is particularly preferable.

Component B-3 may be a commercial product. The examples of the commercial products include SR531 (manufactured by SARTOMER).

From the viewpoint of adhesion of image to a recording medium, and curability of the ink composition, the total content of Component B-3 is preferably 0.5 to 40 wt% relative to the total weight of the ink composition, more preferably 1 to 35 wt%, yet more preferably 2 to 30 wt%, and particularly preferably 2 to 20 wt%.

<Other monofunctional (meth)acrylate compound>

In the present invention, the ink composition may comprise other monofunctional (meth)acrylate compound and polyfunctional (meth)acrylate compound other than Component B-1 to Component B-3.

Specific examples of the monofunctional (meth)acrylate compound other than Component B-1 to Component B-3 include isoamyl (meth)acrylate, stearyl (meth)acrylate, lauryl (meth)acrylate, octyl (meth)acrylate, isooctyl (meth)acrylate, decyl (meth)acrylate, isomyristyl (meth)acrylate, isostearyl (meth)acrylate, 2-ethylhexyl diglycol (meth)acrylate, 2-hydroxybutyl (meth)acrylate, buthoxyethyl (meth)acrylate, methoxydiethylene glycol (meth)acrylate, methoxypolyethylene glycol (meth)acrylate, methoxypropylene glycol (meth)acrylate, tetrahydrofurfuryl (meth)acrylate, isobornyl (meth)acrylate, 2-hydroxyethyl (meth)acrylate, 2-hydroxypropyl (meth)acrylate, 2-(meth)acryloyloxyethylsuccinic acid, 2-(meth)acryloyloxyethyl-2-hydroxyethylphthalic acid, a lactone-modified flexible (meth)acrylate, *t*-butylcyclohexyl (meth)acrylate, 2-(2-ethoxyethoxy)ethyl (meth)acrylate, cyclopentenyl (meth)acrylate, cyclopentenyloxyethyl (meth)acrylate, and dicyclopentanyl (meth)acrylate, etc.

In the present invention, the content of the monofunctional polymerizable compound (including Component B-1 to B-3) is preferably more than 40 wt% relative to the weight of the entire ink composition, more preferably 45 to 90 wt%, and yet more preferably 50 to 80 wt%.

<Polyfunctional (meth)acrylate compound>

From the viewpoint of curability of the ink composition, the ink composition of the present invention preferably comprises a polyfunctional (meth)acrylate compound as a polymerizable compound.

Specific examples of the polyfunctional (meth)acrylate include bis(4-acryloxypolyethoxyphenyl)propane, neopentyl glycol di(meth)acrylate, ethoxylated (2) neopentyl glycol di(meth)acrylate (compound formed by di(meth)acrylating neopentyl glycol ethylene oxide 2 mole adduct), propoxylated (2) neopentyl glycol di(meth)acrylate (compound formed by di(meth)acrylating neopentyl glycol propylene oxide 2 mole adduct), 1,6-hexanediol di(meth)acrylate, 1,9-nonanediol di(meth)acrylate, ethylene glycol di(meth)acrylate, diethylene glycol di(meth)acrylate, triethylene glycol di(meth)acrylate, tetraethylene glycol di(meth)acrylate, polyethylene glycol di(meth)acrylate, dipropylene glycol di(meth)acrylate, tripropylene glycol di(meth)acrylate, tetrapropylene glycol di(meth)acrylate, polypropylene glycol di(meth)acrylate, pentaerythritol tri(meth)acrylate, pentaerythritol tetra(meth)acrylate, dipentaerythritol tetra(meth)acrylate, trimethylolpropane tri(meth)acrylate, tetramethylolmethane tetra(meth)acrylate, tetramethylolmethane tri(meth)acrylate, dimethyloltricyclodecane di(meth)acrylate, modified glycerol tri(meth)acrylate, modified bisphenol A di(meth)acrylate, bisphenol A propylene oxide (PO) adduct di(meth)acrylate, bisphenol A ethylene oxide (EO) adduct di(meth)acrylate, dipentaerythritol hexa(meth)acrylate, and caprolactone-modified dipentaerythritol hexa(meth)acrylate.

As the polyfunctional (meth)acrylate compound, it is preferable to use a difunctional (meth)acrylate compound and a trifunctional (meth)acrylate compound in combination, and especially preferable to use dipropylene glycol di(meth)acrylate and trimethylolpropane tri(meth)acrylate in combination.

The ink composition of the present invention preferably comprises oligomer.

The 'oligomer' referred to here is usually a polymer having a limited number (usually 5 to 100) of monomer-based constituent units, and the weight-average molecular weight is preferably 400 to 10,000, and more preferably 500 to 5,000.

The oligomer preferably comprise has a (meth)acryloyl group as a functional group.

From the viewpoint of a balance being achieved between flexibility and curability, the number of the functional group of the oligomer per molecule is preferably 1 to 15, more preferably 2 to 6, yet more preferably 2 to 4, and particularly preferably 2.

Examples of the oligomer in the present invention include polyester(meth)acrylate, an olefin-based oligomer (an ethylene oligomer, a propylene oligomer, a butene oligomer, etc.), a vinyl-based oligomer (a styrene oligomer, a vinyl alcohol oligomer, a vinylpyrrolidone oligomer, an (meth)acrylate oligomer, etc.), a diene-based oligomer (a butadiene oligomer, a chloroprene rubber, a pentadiene oligomer, etc.), a ring-opening polymerization type oligomer (di-, tri-, tetra-ethylene glycol, polyethylene glycol, polyethylimine, etc.), an addition-polymerization type oligomer (an oligoester (meth)acrylate, a polyamide oligomer, a polyisocyanate oligomer), an addition-condensation oligomer (a phenolic resin, an amino resin, a xylene resin, a ketone resin, etc.), and an amino modifier polyester oligomer. Among them an oligoester (meth)acrylate is preferable, and among them a urethane (meth)acrylate, oligomer and a polyester (meth)acrylate oligomer are more preferable, and a urethane (meth)acrylate oligomer is particularly preferable so as to obtain an ink composition having excellent curability and adhesion.

With regard to the oligomer, one type thereof may be used on its own or two or more types may be used in combination.

As the urethane (meth)acrylate, an aliphatic urethane (meth)acrylate oligomer and an aromatic urethane (meth)acrylate oligomer may preferably be cited, and an aliphatic urethane (meth)acrylate oligomer may more preferably be cited.

With respect to the oligomer, 'Origomar Handobukku (Oligomer Handbook)' (edited by Junji Furukawa, The Chemical Daily Co., Ltd.) may also be referred to.

Examples of the urethane (meth)acrylate oligomer include U-2PPA, U-4HA, U-6HA, U-6LPA, U-15HA, U-324A, UA-122P, UA5201, and UA-512 manufactured by Shin-Nakamura Chemical Co., Ltd., CN964A85, CN964, CN959, CN962, CN963J85, CN965, CN982B88, CN981, CN983, CN996, CN9002, CN9007, CN9009, CN9010, CN9011, CN9178, CN9788, and CN9893 manufactured by Sartomer Company Inc., and EB204, EB230, EB244, EB245, EB270, EB284, EB285, EB810, EB4830, EB4835, EB4858, EB1290, EB210, EB215, EB4827, EB4830, EB4849, EB6700, EB204, EB8402, EB8804, and EB8800-20R manufactured by Daicel-Cytec Company Ltd.

Examples of the amine-modified polyester oligomer include EB524, EB80, and EB81 manufactured by Daicel-Cytec Company Ltd., CN550, CN501, and CN551 manufactured by Sartomer Company Inc., and GENOMER 5275 of Rahn A.G.

From the viewpoint of a balance being achieved between curability and adhesion, the content of the oligomer is preferably 0.1 to 10 wt% relative to the total weight of the ink composition, more preferably 0.5 to 8 wt%, and yet more preferably 1 to 6 wt%.

From the viewpoint of curability, the content of the polyfunctional (meth)acrylate compound, including the oligomer, is preferably 1 to 30 wt% relative to the total weight of the ink composition, more preferably 3 to 25 wt%, and yet more preferably 5 to 20 wt%.

<Vinylether compound>

As Component B, a vinyl ether compound may be used. The vinyl ether compound can be roughly divided into monovinyl ether compound and di- or tri-vinyl ether compound.

Examples of vinyl ether compounds that are suitably used include di- or tri-vinyl ether compounds such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether, and trimethylolpropane trivinyl ether, and monovinyl ether compounds such as ethylene glycol monovinyl ether, triethylene glycol monovinyl ether, hydroxyethyl monovinyl ether, ethyl vinyl ether, *n*-butyl vinyl ether, isobutyl vinyl ether, octadecyl vinyl ether, cyclohexyl vinyl ether, hydroxybutyl vinyl ether, 2-ethylhexyl vinyl ether, hydroxynonyl monovinyl ether, cyclohexanedimethanol monovinyl ether, n-propyl vinyl ether, isopropyl vinyl ether, isopropenyl vinyl ether, dodecyl vinyl ether, and diethylene glycol monovinyl ether.

The total content of Component B in the ink composition is preferably 70 to 99 wt%, and more preferably 80 to 95 wt%.

(Component C) Polymerization initiator

In the present invention, the dark color ink composition and the light color ink composition comprise, as the polymerization initiator (Component C), (Component C-1) a thioxanthone-based polymerization initiator as an essential component, and further preferably comprise (Component C-2) an $\alpha$-aminoalkylphenone and (Component C-3) an acylphosphine oxide compound.

The polymerization initiator in the present invention includes not only a compound that generates a polymerization-initiating species by absorbing external energy such as actinic radiation but also a compound that promotes decomposition of a polymerization initiator by absorbing specific actinic radiation (a so-called sensitizer).

(Component C-1) Thioxanthone-based polymerization initiator

In the present invention, the dark color ink composition and the light color ink composition all comprise a thioxanthone-based polymerization initiator (hereinafter, also called a thioxanthone compound).

The thioxanthone compound is preferably a compound represented by Formula (C-1).

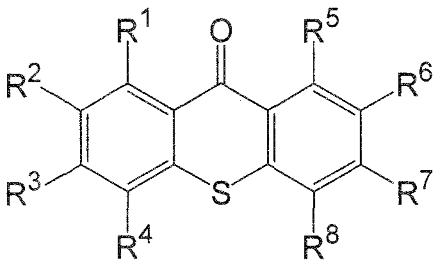

(c-1)

(In Formula (c-1), $R^1$ to $R^8$ independently denote a hydrogen atom, an alkyl group, a halogen atom, a hydroxy group, a cyano group, a nitro group, an amino group, an alkylthio group, an alkylamino group (including the case of monosubstituted, and disubstituted), an alkoxy group, an alkoxycarbonyl group, an acyloxy group, an acyl group, a carboxy group, or a sulfo group.)

The number of carbon atoms of an alkyl moiety in the alkyl group, alkylthio group, alkylamino group, alkoxy group, alkoxycarbonyl group, acyloxy group, and acyl group is preferably 1 to 20, more preferably 1 to 8, and yet more preferably 1 to 4.

Two of $R^1$ to $R^8$ that are adjacent may be joined to each other to form a ring. When they form a ring, examples of the ring structure include a 5- or 6-membered aliphatic or aromatic ring; it may be a heterocyclic ring containing an element other than a carbon atom, and rings thus formed may be further combined to form a bicyclic ring, for example a fused ring. These ring structures may further have a substituent. Examples of the substituent include a halogen atom, a hydroxy group, a cyano group, a nitro group, an amino group, an alkylthio group, an alkylamino group, an alkoxy group, an alkoxycarbonyl group, an acyloxy group, an acyl group, a carboxy group, and a sulfo group. Examples of a heteroatom when the resulting ring structure is a heterocyclic ring include N, O, and S.

Examples of the thioxanthone compound include thioxanthone, 2-isopropylthioxanthone, 4-isopropylthioxanthone, 1-chloro-4-propoxy-9H-thioxanthone, 2-chlorothioxanthone, 2-dodecylthioxanthone, 2,4-diethylthioxanthone, 2,4-dimethylthioxanthone, 1-methoxycarbonylthioxanthone, 2-ethoxycarbonylthioxanthone, 3-(2-methoxyethoxycarbonyl)thioxanthone, 4-butoxycarbonylthioxanthone, 3-butoxycarbonyl-7-methylthioxanthone, 1-cyano-3-chlorothioxanthone, 1-ethoxycarbonyl-3-chlorothioxanthone, 1-ethoxycarbonyl-3-ethoxythioxanthone, 1-ethoxycarbonyl-3-aminothioxanthone, 1-ethoxycarbonyl-3-phenylsulfurylthioxanthone, 3,4-di[2-(2-methoxyethoxy)ethoxycarbonyl]thioxanthone, 1-ethoxycarbonyl-3-(1-methyl-1-morpholinoethyl)thioxanthone, 2-methyl-6-dimethoxymethylthioxanthone, 2-methyl-6-(1,1-dimethoxybenzyl)thioxanthone, 2-morpholinomethylthioxanthone, 2-methyl-6-morpholinomethylthioxanthone, *n*-allylthioxanthone-3,4-dicarboximide, *n*-octylthioxanthone-3,4-dicarboxyimide, *N*-(1,1,3,3-tetramethylbutyl)thioxanthone-3,4-dicarboxyimide, 1-phenoxythioxanthone, 6-ethoxycarbonyl-2-methoxythioxanthone, 6-ethoxycarbonyl-2-methylthioxanthone, thioxanthone-2-polyethylene glycol ester, and 2-hydroxy-3-(3,4-dimethyl-9-oxo-9H-thioxanthon-2-yloxy)-*N*,*N*,*N*-trimethyl-1-propanaminium chloride.

Among them, from the viewpoint of ready availability and curability, 2,4-diethylthioxanthone, 2-isopropylthioxanthone, and 4-isopropylthioxanthone are more preferable, and 2-isopropylthioxanthone and 2,4-diethylthioxanthone are particularly preferable.

In the present invention, the content of the thioxanthone-based polymerization initiator in the dark color ink composition is preferably 0.1 to 6 wt% of the entire ink composition, more preferably 0.3 to 5 wt%, and yet more preferably 0.5 to 4 wt%. When the content of the thioxanthone-based polymerization initiator in the dark color ink composition is at least 0.1 wt%, curability is excellent, and when it is no greater than 6 wt%, hue and adhesion are excellent.

Furthermore, the content of the thioxanthone-based polymerization initiator in the light color ink composition is preferably 0.05 to 4 wt% of the entire ink composition, more preferably 0.1 to 3 wt%, and yet more preferably 0.3 to 2.5 wt%. When the content of the thioxanthone-based polymerization initiator in the light color ink composition is at least 0.05 wt%, curability is excellent, and when it is no greater than 4 wt% hue and adhesion are excellent.

(Component C-2) α-Aminoalkylphenone compound

From the viewpoint of curability, the ink composition of the present invention preferably further comprises (Component C-2) an α-aminoalkylphenone compound.

As Component C-2, a compound represented by Formula (c-2-1) is preferable.

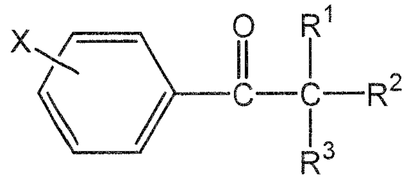

(c-2-1)

In Formula (c-2-1), $R^1$, $R^2$, and $R^3$ independently denote a hydroxy group, an optionally substituted alkyl group, an optionally substituted alkoxy group, or an optionally substituted amino group, and X denotes a hydrogen atom, an optionally substituted amino group, an optionally substituted alkylthio group, or an optionally substituted alkyl group. When $R^1$, $R^2$, $R^3$, and X are amino groups, the substituents may be bonded to each other to form a heterocyclic group. Examples of the substituent include an alkyl group having 1 to 10 carbons.

Component C-2 is preferably a compound represented by Formula (c-2-2) or Formula (c-2-3).

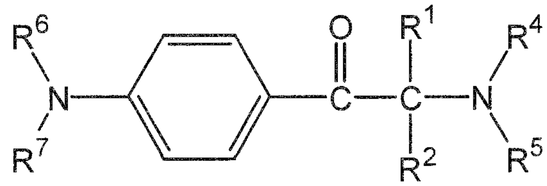

(c-2-2)

In Formula (c-2-2), $R^4$, $R^5$, $R^6$, and $R^7$ independently denote an optionally substituted alkyl group, and at least one of $R^4$ and $R^5$, and $R^6$ and $R^7$, may be bonded to each other to form a heterocyclic group. $R^1$ and $R^2$ and the substituent in Formula (c-2-2) are the same as those in Formula (c-2-1).

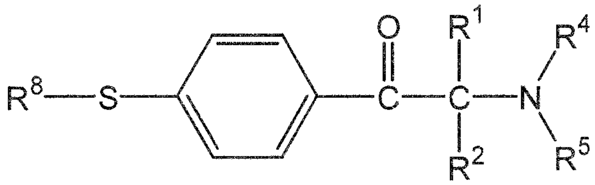

(c-2-3)

In Formula (c-2-3), $R^8$ denotes an optionally substituted alkyl group.

$R^1$, $R^2$, and the substituent in Formula (c-2-3) are the same as $R^1$, $R^2$, and the substituent in Formula (c-2-1), and $R^4$ and $R^5$ in Formula (c-2-3) are the same as $R^4$ and $R^5$ in Formula (c-2-2).

The heterocyclic group is not particularly limited and may be selected as appropriate, but for example a morpholino group is preferable.

Preferred examples of the α-aminoalkylphenone compound include, as commercial products, IRGACURE 369 (Ciba Specialty Chemicals), IRGACURE 379 (Ciba Specialty Chemicals), and IRGACURE 907 (Ciba Specialty Chemicals).

Among them, the α-aminoalkylphenone compound is particularly preferably 2-[4-(methylthio)benzoyl]-2-(4-morpholinyl)propane (IRGACURE 907).

The content of the α-aminoalkylphenone compound in the dark color ink composition is preferably 0.1 to 6 wt% of the entire ink composition, more preferably 0.5 to 5 wt%, and yet more preferably 1 to 4 wt%. When the content of the α-aminoalkylphenone compound in the dark color ink composition is at least 0.1 wt%, the curability is excellent. When it is no greater than 6 wt%, the adhesion and storage stability are excellent.

Furthermore, the content of the α-aminoalkylphenone compound in the light color ink composition is preferably 0.05 to 5 wt% of the entire ink composition, more preferably 0.1 to 4 wt%, and yet more preferably 0.5 to 4 wt%. When the content of the α-aminoalkylphenone compound in the light color ink composition is at least 0.05 wt%, the curability is excellent. Furthermore, when it is no greater than 5 wt%, the adhesion and storage stability are excellent.

(Component C-3) Acylphosphine oxide compound

The ink composition of the present invention preferably comprises (Component C-3) an acylphosphine oxide compound.

The acylphosphine oxide compound (Component C-3) is not particularly limited, and known compounds may

be used. Preferred examples thereof include acylphosphine oxide compounds described in paragraphs 0080 to 0098 of JP-A-2009-096985, and among them a compound having a structure represented by Formula (c-3-1) or (c-3-2) in the molecular structure is more preferable.

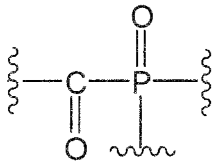 (c-3-1) 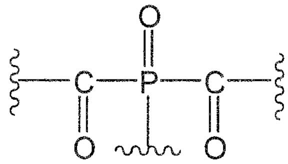 (c-3-2)

(In the Formula, the wavy line portion denotes the position of bonding to another structure.)

The acylphosphine oxide compound is particularly preferably a compound represented by Formula (c-3-3) or (c-3-4).

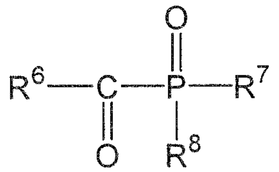 (c-3-3)

(In Formula (c-3-3), $R^6$, $R^7$, and $R^8$ independently denote an aromatic hydrocarbon group, which may have a methyl group or an ethyl group as a substituent.)

With regard to a monoacylphosphine oxide compound represented by Formula (c-3-3), it is preferable that $R^6$ to $R^8$ are phenyl groups, which may have a methyl group as a substituent, and it is more preferable that $R^7$ and $R^8$ are phenyl groups and $R^6$ is a phenyl group having 1 to 3 methyl groups.

Among them, as the monoacylphosphine oxide compound represented by Formula (c-3-3), 2,4,6-trimethylbenzoyldiphenylphosphine oxide (Darocur TPO manufactured by Ciba Specialty Chemicals, Lucirin TPO manufactured by BASF) is preferable.

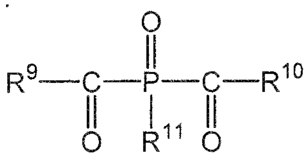 (c-3-4)

(In Formula (c-3-4), $R^9$, $R^{10}$ and $R^{11}$ independently denote an aromatic hydrocarbon group, which may have a methyl group or an ethyl group as a substituent.)

With regard to a bisacylphosphine oxide compound represented by Formula (c-3-4), it is preferable that $R^9$ to $R^{11}$ are phenyl groups, which may have a methyl group as a substituent, and it is more preferable that $R^{11}$ is a phenyl group and $R^9$ and $R^{10}$ are phenyl groups having 1 to 3 methyl groups.

Among them, as the bisacylphosphine oxide compound represented by Formula (c-3-4), bis(2,4,6-trimethylbenzoyl)phenylphosphine oxide (IRGACURE 819, manufactured by Ciba Specialty Chemicals) is preferable.

The content of the acylphosphine oxide compound in the dark color ink composition is preferably 0.1 to 8 wt% of the entire ink composition, more preferably 0.5 to 6 wt%, and yet more preferably 1 to 5 wt%. When the content of the acylphosphine oxide compound in the dark color ink composition is at least 0.1 wt%, the curability is excellent, and when it is no greater than 8 wt%, the adhesion and storage stability are excellent.

Furthermore, the content of the acylphosphine oxide compound in the light color ink composition is preferably 0.05 to 6 wt% of the entire ink composition, more preferably 0.1 to 5 wt%, and yet more preferably 0.5 to 4 wt%. When the content of the acylphosphine oxide compound in the light color ink composition is at least 0.05 wt%, the curability is excellent, and when it is no greater than 6 wt%, the adhesion and storage stability are excellent.

In the present invention, the dark color ink composition and the light color ink composition all preferably comprise as the polymerization initiator (Component C-1) a thioxanthone-based polymerization initiator, (Component C-2) an α-aminoalkylphenone compound, and (C-3) an acylphosphine oxide compound, and it is preferable that the contents (c1), (c2), and (c3) by weight thereof in each ink composition satisfy Expression (A) below.

$$(c1) \leq (c2) + (c3) \qquad (A)$$

When the content of the thioxanthone-based polymerization initiator satisfies Expression (A), the curability is excellent.

The content (c1) of the thioxanthone-based polymerization initiator is preferably 40 to 80 wt% of the total content ((c2) + (c3)) of the $\alpha$-aminoalkylphenone compound and acylphosphine oxide compound, more preferably 30 to 70 wt%, and particularly preferably 20 to 60 wt%.

<Other polymerization initiator>

Ink composition of the present invention may comprise other polymerization initiator other than Component C-1 to Component C-3. Examples of other polymerization initiator include an aromatic ketone, an aromatic onium salt compound, an organic peroxide, a thio compound, a hexaarylbiimidazole compound, a ketoxime ester compound, a borate compound, an azinium compound, a metallocene compound, an active ester compound, and a compound having a carbon-halogen bond. Details of the above-mentioned polymerization initiators are known to a person skilled in the art, and are described in for example paragraphs 0090 to 0116 of JP-A-2009-185186.

Furthermore, as another polymerization initiator, a thiochromanone compound may be used, and examples thereof include compounds described in paragraphs 0064 to 0068 of JP-A-2010-126644.

The total content of the polymerization initiator in the dark color ink composition is preferably 1 to 20 wt%, more preferably 3 to 18 wt%, and yet more preferably 5 to 15 wt%.

Furthermore, the total content of the polymerization initiator in the light color ink composition is preferably 0.5 to 15 wt%, more preferably 1 to 10 wt%, and yet more preferably 3 to 13 wt%.

When in the above-mentioned range, it is possible to sufficiently cure the ink composition and obtain a cured film having a uniform degree of curing.

(Other components)

The ink composition of the present invention may comprise as necessary, in addition to the above-mentioned components, a polymerization inihibitor, a co-sensitizer, a UV absorber, an antioxidant, an antifading agent, a conductive salt, a solvent, a polymer compound, a basic compound, a surfactant, a leveling additive, a matting agent and, for adjusting film physical properties, a polyester resin, polyurethane resin, vinyl resin, acrylic resin, rubber resin, or wax, etc. They are described in JP-A-2009-185186 and may be used in the present invention as well.

The ink composition of the present invention preferably comprises a dispersant. Especially, when the pigment is used, the ink composition preferably comprises a dispersant in order to stably disperse the pigment in the ink composition.

As the dispersant, a polymeric dispersant is preferable. The 'polymeric dispersant' referred to in the present invention means a dispersant having a weight-average molecular weight of 1,000 or greater.

The content of the dispersant in the ink composition of the present invention is appropriately selected according to the intended purpose, and is preferably 0.05 to 15 wt% relative to the weight of the entire ink composition.

(Properties of ink)

While taking into consideration dischargeability, the ink composition of the present invention has a viscosity at 25°C of preferably no more than 40 mPa·s, more preferably 5 to 40 mPa·s, and yet more preferably 7 to 30 mPa·s. Furthermore, the viscosity of the ink composition at the discharge temperature (preferably 25°C to 80°C, and more preferably 25°C to 50°C) is preferably 3 to 15 mPa·s, and more preferably 3 to 13 mPa·s. With regard to the ink composition of the present invention, it is preferable that its component ratio is appropriately adjusted so that the viscosity is in the above-mentioned range. When the viscosity at room temperature is set to be high, even when a porous recording medium is used, penetration of the ink into the recording medium can be prevented, and uncured monomer can be reduced. Furthermore, ink spreading when ink droplets have landed can be suppressed, and as a result there is the advantage that the image quality is improved.

Furthermore, the surface tension at 25°C of the ink composition is preferably 20 to 40 mN/m, and more preferably 23 to 39 mN/m. When recording is carried out on various recording media such as polyolefin, polyethylene terephthalate (PET), coated paper, and non-coated paper, from the viewpoint of spreading and penetration it is preferably at least 20 mN/m, and from the viewpoint of wettability it is preferably no greater than 40 mN/m.

II. Inkjet recording method

The inkjet recording method of the present invention comprises (a) a step of discharging onto a recording medium an ink composition constituting the ink set for inkjet recording of the present invention and (b) a step of curing the ink composition by irradiating the discharged ink composition with actinic radiation using a UV light-emitting diode. The inkjet recording method of the present invention is a method for forming an image by means of an ink composition cured on a recording medium by virtue of it comprising steps (a) and (b).
The UV light-emitting diode in step (b) above preferably has an emission peak in the range of 380 to 420 nm and a maximum illumination intensity on the recording medium of 10 to 2,000 mW/cm$^2$.

<(a) Step>

The step (a) of discharging onto a recording medium the ink composition constituting the ink set for inkjet recording of the present invention (hereinafter also called an image forming step) is explained.
The recording medium used in the present invention is not particularly limited, and known recording medium may be used. Examples thereof include paper, paper laminated with a plastic (e.g. polyethylene, polypropylene, polystyrene, etc.), a metal plate (e.g. aluminum, zinc, copper, etc.), a plastic film (e.g. polyvinyl chloride, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinylacetal, etc.), and paper or plastic film laminated or vapor-deposited with the above metal. In the present invention, as the recording medium, a non-absorbing recording medium may preferably be used, and among them, plastic film or paper is more preferable.
An inkjet recording device used in the image forming step of the present invention is not particularly limited, and any known inkjet recording device that can achieve an intended resolution may be used. That is, any known inkjet recording device, such as a commercial product, may be used in order to discharge an ink onto a support (a recording medium) in step (a) of the inkjet recording method of the present invention.
The inkjet recording device that can be used in the present invention is equipped with, for example, an ink supply system, a temperature sensor, and an actinic radiation source.
The ink supply comprises, for example, a main tank containing the ink composition of the present invention, a supply pipe, an ink composition supply tank immediately before an inkjet head, a filter, and a piezo system inkjet head. The piezo system inkjet head may be driven so as to discharge a multisize dot of preferably 1 to 100 pL, more preferably 3 to 42 pL, and yet more preferably 8 to 30 pL, at a resolution of preferably 320 x 320 to 4,000 x 4,000dpi, more preferably 400 x 400 to 1,600 x 1,600dpi. Here, dpi referred to in the present invention means the number of dots per 2.54 cm.
An inkjet head used in the inkjet recording method of the present invention is preferably an inkjet head having a non-liquid repellent-treated nozzle plate. As the nozzle plate, a known nozzle plate may be used and, for example, inkjet heads described in US Pat. No. 7,011,396 or US Pat. Application Publication No. 2009/0290000 may preferably be used. Such a nozzle plate is mounted in, for example, a piezo drive system on-demand inkjet head manufactured by FUJIFILM Dimatix, Inc. Specific examples thereof include the S-class and Q-class Sapphire.
The nozzle plate is preferably one in which at least part of a face on the side opposing a recording medium is treated so as to be non-liquid repellent (ink affinity treatment). As a non-liquid repellent treatment method, a known method may be used and examples thereof include, but are not limited to, (1) a method in which a silicon oxide film is formed by thermally oxidizing the surface of a nozzle plate made of silicon, (2) a method in which an oxide film of silicon or a material other than silicon is oxidatively formed or a method in which it is formed by sputtering, and (3) a method in which a metal film is formed. Details of these methods may be referred to in US Application Publication No. 2010/0141709A.
The inkjet head preferably has a productivity of at least 200 ng*kHz.
The productivity is calculated from weight per dot of the ink composition $\times$ number of nozzles $\times$ frequency, and means the weight of the ink composition that is discharged during one second.
Since the ink composition of the present invention has high curing sensitivity and can be cured in a short period of time, even if image formation equipment having a productivity of at least 200 ng*kHz is used, it is possible to form an image without degrading the image quality. The productivity is preferably 200 to 800 ng*kHz, more preferably 300 to 600 ng*kHz, and particularly preferably at least 400 ng*kHz.
In the present invention, since it is desirable for the ink composition to be discharged at a constant temperature, an image forming equipment that can thermally insulate and heat a section from the ink composition supply tank to the inkjet head is preferably used. A method of controlling temperature is not particularly limited, but it is preferable to provide, for example, temperature sensors at a plurality of pipe section positions, and control heating according to the ink composition flow rate and the temperature of the surroundings. The temperature sensors may be provided on the ink composition supply tank and in the vicinity of the inkjet head nozzle. Furthermore, the head unit that is to be heated is preferably thermally shielded or insulated so that the device main body is not influenced by the temperature of the outside

air. In order to reduce the printer start-up time required for heating, or in order to reduce the thermal energy loss, it is preferable to thermally insulate the head unit from other sections and also to reduce the heat capacity of the entire heated unit.

Since a radiation curing type ink composition such as the ink composition of the present invention generally has a higher viscosity than that of an aqueous ink composition usually used as an ink composition for inkjet recording, variation in the viscosity due to variation in temperature at the time of discharge is large. Variation in the viscosity of the ink composition greatly affects change in size of liquid droplets and change in discharge rate of liquid droplets, and consequently causes degradation of image quality. It is therefore preferable to maintain the temperature of the ink composition at the time of discharge as constant as possible. Therefore, the control range for the temperature of the ink composition is preferably ±5°C of a set temperature, more preferably ±2°C of the set temperature, and yet more preferably ±1°C of the set temperature.

<Step (b)>

Step (b) of curing the ink composition by irradiating the discharged ink composition with actinic radiation using a UV light-emitting diode (hereinafter, also called a curing step) is now explained.

The ink composition discharged on a recording medium is cured by irradiation with UV. This is due to a polymerization initiator contained in the ink composition in the present invention being decomposed by irradiation with UV to thus generate a polymerization-initiating species such as a radical, and the initiating species functioning so as to cause and promote a polymerization reaction of a polymerizable compound. In this process, if a sensitizer is present together with the polymerization initiator in the ink composition, the sensitizer in the system absorbs UV, attains an excited state, and contacts the polymerization initiator to thus promote decomposition of the polymerization initiator, thereby achieving a higher sensitivity curing reaction.

In the curing step, as a radiation source for UV, a light-emitting diode (UV-LED) that emits UV having an emission peak wavelength in the range of 380 to 420 nm is preferably used.

As the UV-LED, for example, Nichia Corporation put on the market a violet LED for which the main emission spectrum has a wavelength between 365 nm and 420 nm. Furthermore, other ultraviolet LEDs are also available, and irradiation may be carried out with a different UV bandwidth.

The emission peak wavelength of UV used in the present invention depends on sensitizer absorption characteristics, but is preferably 380 to 420 nm. When it is at least 380 nm, the safety is excellent. When it is no greater than 420 nm, the curability is excellent, which is preferable. From the viewpoint of curability, the UV emission peak wavelength is preferably 380 to 410 nm, and more preferably 380 to 405 nm.

The ink composition used in the present invention has excellent curability toward UV having an emission peak at a longer wavelength than that of UV that has conventionally been used for curing.

Since the ink composition of the present invention has sufficient sensitivity, it is sufficiently cured even with low power actinic radiation. Specifically, it cures sufficiently when the maximum illumination intensity on a recording medium surface is in the range of 10 to 2,000 $mW/cm^2$.

When the maximum illumination intensity on the recording medium surface is at least 10 $mW/cm^2$, the curability is excellent, and there is no tackiness of an image or degradation of image quality. Furthermore, when the maximum illumination intensity on the recording medium surface is no greater than 2,000 $mW/cm^2$, curing of the discharged ink composition does not progress excessively quickly, and degradation of the image quality due to asperities being formed on the image surface is suppressed.

From the viewpoints of image quality and productivity, the maximum illumination intensity on the recording medium surface is preferably 650 to 1,800 $mW/cm^2$, and more preferably 700 to 1,700 $mW/cm^2$.

The ink composition of the present invention is desirably exposed to such ultraviolet rays for preferably 0.01 to 2 sec., more preferably 0.1 to 1.5 sec., and yet more preferably 0.3 to 1 sec.

Irradiation conditions and a basic method for irradiation with actinic radiation are disclosed in JP-A-60-132767. Specifically, a light source is provided on either side of a head unit that includes an ink composition discharge device, and the head unit and the light source are made to scan by a so-called shuttle system.

In this way, in accordance with the use of a small-size and light-weight UV-LED as an actinic radiation source provided in the operating part, it is possible to achieve small size and low energy inkjet recording equipment, thus enabling an image to be formed with high productivity. Moreover, since a UV-LED has excellent versatility with regard to exposure conditions, suitable exposure conditions may be set according to the ink composition, and an image can be formed with high productivity.

Irradiation with actinic radiation is carried out after a fixed period of time (preferably 0.01 to 0.5 seconds, more preferably 0.01 to 0.3 seconds, yet more preferably 0.01 to 0.15 seconds) has elapsed after the ink composition has landed.

By controlling the time from ink composition landing to irradiation so as to be a minimum in this way, it becomes

possible to prevent the ink composition that has landed on a recording medium from spreading before being cured. Furthermore, since the ink composition can be exposed before it reaches a deep area of a porous recording medium that the light source cannot reach, it is possible to prevent monomer from remaining unreacted.

Furthermore, curing may be completed using another light source that is not driven. WO99/54415 discloses, as an irradiation method, a method employing an optical fiber and a method in which a collimated light source is incident on a mirror surface provided on a head unit side face, and a recorded area is irradiated with UV light.

In the curing step, the energy applied by the light-emitting diode, that is, the energy (integrated amount of light) applied to the ink composition on the recording medium by irradiation with UV, is preferably 100 to 1,000 mJ/cm$^2$, more preferably 150 to 800 mJ/cm$^2$, and yet more preferably 200 to 700 mJ/cm$^2$. It is preferable for it to be in the above-mentioned numerical range since a balance can be achieved between productivity and curability.

In the inkjet recording method of the present invention, it is also preferable to form at least part of an image in a printed material by repeating the image formation step (a) and the curing step (b) at least twice because an image having excellent surface gloss is obtained.

Examples of the mode in which at least part of an image in a printed material is formed by repeating the image formation step (a) and the curing step (b) at least twice include a mode in which a color image is formed by carrying out steps (a) and (b) above once per color, a mode in which a monochromatic image is formed by repeating steps (a) and (b) above twice or more for the monochromatic image, and a mode in which a color image is formed by repeating steps (a) and (b) above twice or more for one color of the color image to thus form a monochromatic image and by further repeating in the same manner steps (a) and (b) above twice or more for another color of the color image.

By employing the above-mentioned inkjet recording method, the dot diameter of the landed ink composition can be kept constant for various supports having different surface wettability, thus improving the image quality. In order to obtain a color image, it is preferable to superimpose in sequence from a low lightness color. By superimposing in sequence from an ink composition having low lightness, radiation can easily reach an ink composition in a lower part, and good curing sensitivity, reduction in residual monomer, and improvement of adhesion can be anticipated. With regard to irradiation, it is possible to carry out exposure of all colors at once after they are discharged, but from the viewpoint of promoting curing it is preferable to carry out exposure for each color.

The inkjet recording method of the present invention employ the ink set of the present invention. The order in which colored ink compositions are discharged is not particularly limited, but it is preferable to apply to a recording medium from a colored ink composition having a low lightness; when the ink set comprising a total of seven colors, that is, light cyan, light magenta ink compositions and cyan, magenta, black, white, and yellow dark ink compositions may preferably be used, and in this case they are applied on top of the recording medium in the order white → light cyan → light magenta → yellow → cyan → magenta → black. In this way, the ink composition of the present invention may be cured by irradiation with actinic radiation in high sensitivity and form an image on the surface of the support.

## Examples

The present invention is explained below more specifically by reference to Examples and Comparative Examples. However, the present invention should not be construed as being limited by these Examples. 'Parts' in the description below means 'parts by weight', and '%" means '% by weight (wt%)' unless otherwise specified.

(Preparation of cyan mill base)

300 parts by weight of IRGALITE BLUE GLVO, 600 parts by weight of SR9003 (propoxylated (2) neopentyl glycol diacrylate (compound formed by diacrylating neopentyl glycol propylene oxide 2 mole adduct)), and 100 parts by weight of Solsperse 32000 were mixed by stirring, thus giving a pigment mill base. Preparation of the pigment mill base was carried out by dispersing using a Motor Mill M50 disperser (Eiger Machinery, Inc.) with zirconia beads having a diameter of 0.65 mm at a peripheral speed of 9 m/s for 4 hours.

(Preparation of magenta mill base)

300 parts by weight of CINQUASIA MAGENTA RT-335 D, 600 parts by weight of SR9003, and 100 parts by weight of Solsperse 32000 were mixed by stirring, thus giving a pigment mill base. Preparation of the pigment mill base was carried out by dispersing using a Motor Mill M50 disperser (Eiger Machinery, Inc.) with zirconia beads having a diameter of 0.65 mm at a peripheral speed of 9 m/s for 10 hours.

(Preparation of yellow mill base)

300 parts by weight of NOVOPERM YELLOW H2G (Clariant), 300 parts by weight of SR9003, and 400 parts

by weight of BYK168 (dispersant, BYK Chemie) were mixed by stirring, thus giving a pigment mill base. Preparation of the pigment mill base was carried out by dispersing using a Motor Mill M50 disperser (Eiger Machinery, Inc.) with zirconia beads having a diameter of 0.65 mm at a peripheral speed of 9 m/s for 8 hours.

(Preparation of black mill base)

300 parts by weight of SPECIAL BLACK 250, 500 parts by weight of SR9003, and 200 parts by weight of BYK168 (dispersant, BYK Chemie) were mixed by stirring, thus giving a pigment mill base. Preparation of the pigment mill base was carried out by dispersing using a Motor Mill M50 disperser (Eiger Machinery, Inc.) with zirconia beads having a diameter of 0.65 mm at a peripheral speed of 9 m/s for 7 hours.

(Examples 1-1 to 1-32 and Comparative Examples 1-1 to 1-20)

<Method for preparing ink composition>

The materials described in Table 1 and Table 2 were mixed by stirring, thus giving each of the ink compositions. The figures in the tables show the amounts (parts by weight) of the components added.

The components in the tables are as follows.

NVC: *N*-vinylcaprolactam (V-CAP, ISP)
PEA: phenoxyethyl acrylate (SR339, Sartomer)
CTFA: cyclic trimethylolpropane formal acrylate (cyclic TMP formal acrylate) (SR531, Sartomer)
IBOA: isobornyl acrylate (SR506, Sartomer)
DPGDA: dipropylene glycol diacrylate (SR508, Sartomer)
TMPTA: trimethylolpropane triacrylate (SR351, Sartomer)
CN964A85: urethane acrylate oligomer, average number of functional groups 2, Sartomer Company Inc. Japan
CN962: urethane acrylate oligomer, average number of functional groups 2, Sartomer Company Inc. Japan
Irg907: 2-methyl-1-(4-methylthiophenyl)-2-morpholinopropan-1-one (IRGACURE 907, Ciba Specialty Chemicals)
Irg369: 2-benzyl-2-dimethylamino-1-(4-morpholinophenyl)-butan-1-one (IRGACURE 369, Ciba Specialty Chemicals)
Irg819: bis(2,4,6-trimethylbenzoyl)phenylphosphine oxide (IRGACURE 819, Ciba Specialty Chemicals)
TPO: 2,4,6-trimethylbenzoyldiphenylphosphine oxide (Darocur TPO, Ciba Specialty Chemicals)
DETX: 2,4-diethylthioxanthone (KAYACURE DETX, Nippon Kayaku Co., Ltd.)
ITX: isopropylthioxanthone (SPEEDCURE ITX, LAMBSON)
ST-1: FIRSTCURE ST-1 (polymerization inhibitor, Chem First)
Tinuvin 770DF: bis(2,2,6,6-tetramethyl-4-piperidyl) sebacate (TINUVIN 770DF, Ciba Specialty Chemicals)

<Inkjet recording method>

Recording on a recording medium was carried out using an experimental inkjet recording system having piezo system inkjet nozzles. The inkjet recording equipment had a total of eight ink supply systems, and each ink supply system independently comprised a main tank, a supply pipe, an ink supply tank immediately before an inkjet head, a filter, and a piezo system inkjet head. The ink tank was charged with the ink prepared, and a section from the ink supply tank to the inkjet head was thermally insulated and heated.

The eight piezo system inkjet heads were arranged in parallel and driven simultaneously so as to discharge multisize dots of 10 to 30 pL at a resolution of 600 $\times$ 400 dpi. The exposure system, the main scanning speed, and the discharge frequency were adjusted so that, after landing, UV light was focused to give an exposure area illumination intensity (maximum illumination intensity on recording medium surface) of 800 mW/cm$^2$, and irradiation started 0.1 sec. to 0.3 sec. after the ink landed on the recording medium. The cumulative amount of light applied to an image was adjusted so as to be 500 mJ/cm$^2$.

The UV lamp employed a UV light-emitting diode emitting UV at a wavelength of 385 nm (NC4U134, Nichia Corporation).

Here, dpi referred to in the present invention denotes the number of dots per 2.54 cm. An image was formed using a polyvinyl chloride sheet as the recording medium.

The evaluations below were carried out using a 12 $\mu$m solid printed film prepared in accordance with the above-mentioned printing method.

[Evaluation of curing sensitivity]

Curing sensitivity was defined as the exposure energy at which color transfer and tackiness of the surface after printing disappeared.

The presence or absence of tackiness of the surface after printing was examined by touch, and color transfer was examined by pressing against plain paper (C2 Photocopy Paper, Fuji Xerox Co., Ltd.) immediately after printing. The evaluation was such that sensitivity was high when there was no color transfer or tackiness, and evaluation was carried out using the criteria below.

Excellent: no color transfer and no tackiness.
Good: no color transfer and hardly any tackiness.
Fair: slight color transfer and slight tackiness.
Poor: color transfer and tackiness.

[Evaluation of adhesion]

As a method for evaluation of adhesion to a polyvinyl chloride substrate, a crosshatch test (JIS K 5600-5-6) was carried out. A solid image having an average film thickness of 12 μm for an image area was drawn in accordance with the above-mentioned inkjet recording method. Subsequently, each printed material was subjected to the crosshatch test. Evaluation was carried out by the six grades of 0 to 5 in accordance with JIS K 5600-5-6. An evaluation of grade 0 means that the cut edge was completely smooth and there was no peeling off in any lattice cell, and evaluation was carried out according to the criteria below.

Good: JIS K5600-5-6 classification 0 to 2
Poor: JIS K5600-5-6 classification 3 to 5

[Evaluation of yellowing]

A halftone image with 16 gradations for each color was formed using the above-mentioned printing method, and the hue in a medium density area (40%) was measured. Here, with regard to measurement of hue, L*a*b* was measured using a spectrophotometer (Spectra Eye, Gretag Macbeth) with an F8 light source at a viewing angle of 2 degrees. A sample prepared using an ink containing no thioxanthone compound was defined as having a $\Delta E$ of 0, and evaluation was carried out using the evaluation criteria below.

A: $\Delta E < 2$ hardly any change in color recognized
B: $2 \leq \Delta E < 3$ color change could be recognized but was rather inconspicuous
C: $3 \leq \Delta E < 4$ some color change
D: $4 \leq \Delta E$ large color change at a level that caused a problem

D was a visible level and there was a problem in practice.

The above-mentioned yellowing was thought to be caused by the polymerization initiator itself or by decomposition or structural change of the polymerization initiator.

[Evaluation of graininess]

A halftone image with 16 gradations for each color was formed using the above-mentioned printing method, and graininess in highlight areas (10% to 40%) was evaluated. Evaluation was carried out visually by 15 ordinary evaluators using the criteria below.

A: 12 or more people evaluated the image as having no feel of noise
B: 8 or more people evaluated the image as having no feel of noise
C: 6 or more people evaluated the image as having no feel of noise
D: 5 people or less evaluated the image as having no feel of noise

With regard to the above-mentioned evaluation criteria, A and B were preferable in practice.

Table 1

| | | | Examples | | | | | | | | | | | | | | | |
|---|---|---|---|---|---|---|---|---|---|---|---|---|---|---|---|---|---|---|
| | | | 1-1 | 1-2 | 1-3 | 1-4 | 1-5 | 1-6 | 1-7 | 1-8 | 1-9 | 1-10 | 1-11 | 1-12 | 1-13 | 1-14 | 1-15 | 1-16 |
| | | | Dark color ink | Light color ink | Dark color ink | Light color ink | Dark color ink | Light colors ink | Dark colors ink | Light color ink | Dark color ink | Light color ink | Dark color ink | Light color ink | Dark color ink | Light color ink | Dark colors ink | Light color ink |
| Mill base | Magenta | Mill base | 15.00 | 3.00 | - | - | 15.00 | 3.00 | - | - | 10.00 | 2.00 | - | - | 10.00 | 2.00 | - | - |
| | | Pigment in mill base | 4.50 | 0.90 | - | - | 4.50 | 0.90 | - | - | 3.00 | 0.60 | - | - | 3.00 | 0.60 | - | - |
| | Cyan | Mill base | - | - | 9.00 | 1.20 | - | - | 9.00 | 1.20 | - | - | 7.00 | 1.00 | - | - | 7.40 | 0.90 |
| | | Pigment in mill base | - | - | 2.70 | 0.36 | - | - | 2.70 | 0.36 | - | - | 2.10 | 0.30 | - | - | 2.22 | 0.27 |
| Monomer | | NVC | 25.0 | 25.0 | 25.0 | 25.0 | 25.0 | 25.0 | 25.0 | 25.0 | 25.0 | 25.0 | 25.0 | 25.0 | 25.0 | 25.0 | 25.0 | 25.0 |
| | | PEA | 27.0 | 27.0 | 27.0 | 27.0 | 27.0 | 27.0 | 27.0 | 27.0 | 27.0 | 30.0 | 27 0 | 30.0 | 27.0 | 30.0 | 27.0 | 30.0 |
| | | CTFA | 3.00 | 3.00 | 3.00 | 3.00 | 3.00 | 3.00 | 3.00 | 3.00 | 3.00 | 5.0 | 3.00 | 5.0 | 3.00 | 5.0 | 3.00 | 5.0 |
| | | IBOA | 14.9 | 16.4 | 18.9 | 18.2 | 15.1 | 16.7 | 19.1 | 18.5 | 18.4 | 12.8 | 21.4 | 13.8 | 19.2 | 13.4 | 20.8 | 13,5 |
| | | DPGDA | - | 5.0 | 2.0 | 5.0 | | 5.0 | 2.0 | 5.0 | 2.0 | 5.0 | 2.0 | 5.0 | 2.0 | 5.0 | 2.0 | 5.0 |
| | | TMPTA | 2.0 | 8.0 | 2.0 | 8.0 | 2.0 | 8.0 | 2.0 | 8.0 | 2.0 | 8.0 | 2.0 | 8.0 | 2.0 | 8.0 | 2.0 | 8.0 |
| Oligomer | | CN964A85 | 3.0 | 3.0 | - | - | 3.0 | 3.0 | - | - | 3.0 | 3.0 | - | - | - | - | 3,0 | 3.0 |
| | | CN962 | - | - | 3.0 | 3.0 | - | - | 3.0 | 3.0 | - | - | 3.0 | 3.0 | 2.0 | 2.0 | - | - |
| Initiator | | Irg907 | 3.0 | 3.0 | 3.0 | 3.0 | 2.0 | 3.0 | 2.0 | 3.0 | 2.0 | 2.0 | 2.0 | 2.0 | 2.0 | 2.0 | 2.0 | 2.0 |
| | | Irg369 | - | - | - | - | 1.0 | - | 1.0 | - | - | - | - | - | - | - | - | - |
| | | Irg819 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 |
| | | TPO | - | - | - | - | - | - | - | - | 1.0 | 1.0 | 1.0 | 1.0 | 1.0 | 1.0 | 1.0 | 1.0 |
| | | DETX | 2.5 | 2.0 | 2.5 | 2.0 | 2.3 | 1.7 | 2.3 | 1.7 | 2.0 | 1.6 | 2.0 | 1.6 | - | - | - | - |
| | | ITX | - | - | - | - | - | - | - | - | - | - | - | - | 2.2 | 2.0 | 2.2 | 2.0 |
| Additive | | ST-1 | 0.30 | 0.30 | 0.30 | 0.30 | 0.30 | 0.30 | 0.30 | 0.30 | 0.30 | 0.30 | 0.30 | 0.30 | 0.30 | 0.30 | 0.30 | 0.30 |
| | | Tinuvin 770DF | 0.30 | 0.30 | 0.30 | 0.30 | 0.30 | 0.30 | 0.30 | 0.30 | 0.30 | 0.30 | 0.30 | 0.30 | 0.30 | 0.30 | 0.30 | 0.30 |

(continued)

| | | Examples | | | | | | | | | | | | | | | |
|---|---|---|---|---|---|---|---|---|---|---|---|---|---|---|---|---|---|
| | | 1-1 | 1-2 | 1-3 | 1-4 | 1-5 | 1-6 | 1-7 | 1-8 | 1-9 | 1-10 | 1-11 | 1-12 | 1-13 | 1-14 | 1-15 | 1-16 |
| | | Dark color ink | Light color ink | Dark color ink | Light color ink | Dark color ink | Light colors ink | Dark colors ink | Light color ink | Dark color ink | Light color ink | Dark color ink | Light color ink | Dark color ink | Light color ink | Dark colors ink | Light color ink |
| Total | | 100.00 | 100.00 | 100.00 | 100.00 | 100.00 | 100.00 | 100.00 | 100.00 | 100.00 | 100.00 | 100.00 | 100.00 | 100.00 | 100.00 | 100.00 | 100.00 |
| Thioxanthone-based polymerization initiator/pigment (ratio by weight) | | 0.56 | 2.22 | 0.93 | 5.56 | 051 | 1.89 | 0.85 | 4.72 | 0.67 | 2.67 | 0.95 | 5.33 | 0.73 | 3.33 | 0.99 | 7.41 |
| Evaluation results | Curing sensitivity | Exc. | Exc. | Exc. | Exc. | Exc. | Good | Exc. | Good | Exc. | Good | Exc. | Good | Exc. | Good | Exc. | Good |
| | Adhesion | Good | Good | Good | Good | Good | Good | Good | Good | Good | Good | Good | Good | Good | Good | Good | Good |
| | Hue | B | A | B | A | B | A | B | A | A | A | A | A | A | A | A | A |
| | Graininess | A | | A | | A | | A | | A | | A | | A | | A | |

Table 2

| | | | Examples | | | | | | | | | | | | | | | | | |
|---|---|---|---|---|---|---|---|---|---|---|---|---|---|---|---|---|---|---|---|---|
| | | | 1-17 Dark color ink | 1-18 Light color ink | 1-19 Dark color ink | 1-20 Light color ink | 1-21 Dark color ink | 1-22 Light color ink | 1-23 Dark color ink | 1-24 Light color ink | 1-25 Dark color ink | 1-26 Light color ink | 1-27 Dark color ink | 1-28 Light color ink | 1-29 Dark color ink | 1-30 Light color ink | 1-31 Dark color ink | 1-31 Light color ink | 1-32 Dark color ink | 1-32 Light color ink |
| Mill base | Magenta | Mill base | 19.00 | 3.20 | - | - | 18.00 | 3.00 | - | - | - | - | 18.00 | 4.00 | - | - | - | - | - | - |
| | | Pigment in mill base | 5.70 | 0.96 | - | - | 5.40 | 0.90 | - | - | - | - | 5.40 | 1.20 | - | - | - | - | - | - |
| | Cyan | Mill base | - | - | 12.00 | 1.20 | - | - | 12.00 | 1.60 | 12.00 | 1.60 | - | - | 12.00 | 4.00 | - | - | - | - |
| | | Pigment in mill base | - | - | 3.60 | 0.36 | - | - | 3.60 | 0.48 | 3.60 | 0.48 | - | - | 3.60 | 1.20 | - | - | - | - |
| | Yellow | Mill base | - | - | - | - | - | - | - | - | - | - | - | - | - | - | 8.00 | 1.30 | - | - |
| | | Pigment in mill base | - | - | - | - | - | - | - | - | - | - | - | - | - | - | 2.40 | 0.39 | - | - |
| | Black | Mill base | - | - | - | - | - | - | - | - | - | - | - | - | - | - | - | - | 8.50 | 1.50 |
| | | Pigment in mill base | - | - | - | - | - | - | - | - | - | - | - | - | - | - | - | - | 2.55 | 0.45 |
| Monomer | | NVC | 25.0 | 25.0 | 25.0 | 25.0 | 25.0 | 25.0 | 25.0 | 25.0 | 25.0 | 25.0 | 25.0 | 25.0 | 25.0 | 25.0 | 25.0 | 25.0 | 25.0 | 25.0 |
| | | PEA | 27.0 | 27.0 | 27.0 | 27.0 | 27.0 | 27.0 | 27.0 | 27.0 | 30.0 | 30.0 | 27.0 | 27.0 | 27.0 | 27.0 | 30.0 | 30.0 | 31.9 | 33.5 |
| | | CTFA | 3.0 | 3.00 | 3.00 | 3.00 | 3.00 | 3.00 | 3.00 | 3.00 | 19.6 | 19.2 | 3.00 | 3.00 | 3.00 | 3.00 | 7.0 | 7.0 | 7.0 | 7.0 |
| | | IBOA | 12.9 | 18.2 | 17.9 | 19.2 | 13.6 | 17.8 | 17.9 | 19.5 | - | - | 13.6 | 16.8 | 17.9 | 17.1 | 12.8 | 12.8 | 10.0 | 10.0 |
| | | DPGDA | - | 5.0 | 1.0 | 5.0 | | 5.0 | 2.0 | 5.0 | - | 5.0 | - | 5.0 | 2.0 | 5.0 | 3.8 | 5.0 | 5.0 | 5.0 |
| | | TMPTA | 2.0 | 8.0 | 2.0 | 8.0 | 2.0 | 8.0 | 2.0 | 8.0 | 2.0 | 8.0 | 2.0 | 8.0 | 2.0 | 8.0 | 2.0 | 6.0 | 6.0 | 6.0 |
| Oligomer | | CN964A85 | 2.0 | 2.0 | 2.0 | 2.0 | 2.0 | 2.0 | 2.0 | 2.0 | - | - | 2.0 | 2.0 | 2.0 | 2.0 | 2.0 | 2.8 | 3.0 | 3.0 |
| | | CN962 | - | - | - | - | - | - | - | - | 2.0 | 2.0 | - | - | - | - | - | - | - | - |
| Initiator | | Irg907 | 2.0 | 2.0 | 2.0 | 2.0 | 2.0 | 2.0 | 2.0 | 2.0 | 2.0 | 2.0 | 2.0 | 2.0 | 2.0 | 2.0 | 2.5 | 2.5 | 2.5 | 2.5 |
| | | Irg369 | - | - | - | - | - | - | - | - | - | - | - | - | - | - | - | - | - | - |
| | | Irg819 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 |
| | | TPO | 1.0 | 1.0 | 1.0 | 1.0 | 1.0 | 1.0 | 1.0 | 1.0 | 1.0 | 1.0 | 1.0 | 1.0 | 1.0 | 1.0 | - | - | - | - |
| | | DETX | 1.50 | 1.0 | 2.5 | 2.0 | 1.8 | 1.6 | 1.5 | 1.3 | - | - | 1.8 | 1.6 | 1.5 | 1.3 | 2.4 | 3.0 | 2.5 | 3.0 |
| | | ITX | - | - | - | - | - | - | - | - | 1.8 | 1.6 | - | - | - | - | - | - | - | - |
| Additive | | ST-1 | 0.30 | 0.30 | 0.30 | 0.30 | 0.30 | 0.30 | 0.30 | 0.30 | 0.30 | 0.30 | 0.30 | 0.30 | 0.30 | 0.30 | 0.30 | 0.30 | 0.30 | 0.30 |
| | | Tinuvin 770DF | 0.30 | 0.30 | 0.30 | 0.30 | 0.30 | 0.30 | 0.30 | 0.30 | 0.30 | 0.30 | 0.30 | 0.30 | 0.30 | 0.30 | 0.30 | 0.30 | 0.30 | 0.30 |
| Total | | | 100.00 | 100.00 | 100.00 | 100.00 | 100.00 | 100.00 | 100.00 | 100.00 | 100.00 | 100.00 | 100.00 | 100.00 | 100.00 | 100.00 | 100.00 | 100.00 | 100.00 | 100.00 |
| Thioxanthone-based polymerization initiator/pigment (ratio by weight) | | | 0.26 | 1.04 | 0.69 | 5.56 | 0.33 | 1.78 | 0.42 | 2.71 | 0.50 | 3.33 | 0.33 | 1.33 | 0.42 | 1.08 | 0.98 | 7.69 | 0.98 | 6.67 |
| Evaluation results | | Curing sensitivity | Good | Good | Exc. | Exc. | Good | Good | Good | Good | Good | Good | Good | Good | Good | Good | Exc. | Exc. | Exc. | Exc. |
| | | Adhesion | Good | Good | Good | Good | Good | Good | Good | Good | Good | Good | Good | Good | Good | Good | Good | Good | Good | Good |
| | | Hue | A | A | B | A | A | A | A | A | A | A | A | A | A | A | A | A | A | A |
| | | Graininess | A | | A | | A | | B | | A | | A | | B | | A | | A | |

Table 3

| | | | Comparative Examples | | | | | | | | | | | | | | | | | | | |
|---|---|---|---|---|---|---|---|---|---|---|---|---|---|---|---|---|---|---|---|---|---|---|
| | | | 1-1 | 1-2 | 1-3 | 1-4 | 1-5 | 1-6 | 1-7 | 1-8 | 1-9 | 1-10 | 1-11 | 1-12 | 1-13 | 1-14 | 1-15 | 1-16 | 1-17 | 1-18 | 1-19 | 1-20 |
| | | | Dark color ink | Light color ink | Dark color ink | Light color ink | Dark color ink | Light color ink | Dark color ink | Light color ink | Dark color ink | Light color ink | Dark color ink | Light color ink | Dark color ink | Light color ink | Dark color ink | Light color ink | Dark color ink | Light color ink | Dark color ink | Light color ink |
| Mill base | Magenta | Mill base | 15.00 | 3.00 | - | - | 15.00 | 2.00 | - | - | 10.00 | 2.00 | - | - | 9.80 | 1.60 | - | - | - | - | - | - |
| | | Pigment in mill base | 4.50 | 0.90 | - | - | 4.50 | 0.60 | - | - | 3.00 | 0.60 | - | - | 2.94 | 0.48 | - | - | - | - | - | - |
| | Cyan | Mill base | - | - | 9.00 | 1.20 | - | - | 9.00 | 1.00 | - | - | 7.00 | 1.00 | - | - | 7.00 | 1.00 | - | - | - | - |
| | | Pigment in mill base | - | - | 2.70 | 0.36 | - | - | 2.70 | 0.30 | - | - | 2.10 | 0.30 | - | - | 2.10 | 0.30 | - | - | - | - |
| | Yellow | Mill base | - | - | - | - | - | - | - | - | - | - | - | - | - | - | - | - | 8.00 | 1.30 | - | - |
| | | Pigment in mill base | - | - | - | - | - | - | - | - | - | - | - | - | - | - | - | - | 2.40 | 0.39 | - | - |
| | Black | Mill base | - | - | - | - | - | - | - | - | - | - | - | - | - | - | - | - | - | - | 8.50 | 1.50 |
| | | Pigment in mill base | - | - | - | - | - | - | - | - | - | - | - | - | - | - | - | - | - | - | 2.55 | 0.45 |
| Monomer | | NVC | 25.0 | 25.0 | 25.0 | 25.0 | 25.0 | 25.0 | 25.0 | 25.0 | 25.0 | 25.0 | 25.0 | 25.0 | 25.0 | 25.0 | 25.0 | 25.0 | 25.0 | 25.0 | 25.0 | 25.0 |
| | | PEA | 31.4 | 31.2 | 29.3 | 29.0 | 27.7 | 28.2 | 29.5 | 29.3 | 31.7 | 31.1 | 31.5 | 31.4 | 29.2 | 28.1 | 29.5 | 29.2 | 30.6 | 31.5 | 31.8 | 32.8 |
| | | CTFA | - | - | - | - | - | - | - | - | - | 5.0 | | 5.0 | - | 5.0 | - | 5.0 | 7.0 | 7.0 | 7.0 | 7.0 |
| | | IBOA | 14.9 | 16.4 | 18.9 | 18.2 | 15.1 | 16.7 | 19.1 | 18.5 | 18.4 | 12.8 | 21.4 | 13.8 | 19.2 | 13.4 | 21.2 | 13.4 | 12.8 | 12.8 | 10.0 | 10.0 |
| | | DPGDA | - | 5.0 | 2.0 | 5.0 | - | 5.0 | 2.0 | 5.0 | 2.0 | 5.0 | 2.0 | 5.0 | 2.0 | 5.0 | 2.0 | 5.0 | 5.0 | 5.0 | 5.0 | 5.0 |
| | | TMPTA | 2.0 | 8.0 | 2.0 | 8.0 | 2.0 | 6.0 | 2.0 | 8.0 | 2.0 | 8.0 | 2.0 | 8.0 | 2.0 | 8.0 | 2.0 | 8.0 | 1.0 | 7.0 | 6.0 | 6.0 |
| Oligomer | | CN964A85 | 3.0 | 3.0 | - | - | 3.0 | 3.0 | - | - | 3.0 | 3.0 | - | - | - | - | 3.0 | 3.0 | 3.0 | 3.0 | 3.0 | 3.0 |
| | | CN962 | - | - | 3.0 | 3.0 | - | - | 3.0 | 3.0 | - | - | 3.0 | 3.0 | 2.0 | 2.0 | - | - | - | - | - | - |
| Initiator | | Irg907 | 3.0 | 3.0 | 3.0 | 3.0 | 2.0 | 3.0 | 2.0 | 3.0 | 2.0 | 2.0 | 2.0 | 2.0 | 2.0 | 2.0 | 2.0 | 2.0 | 2.5 | 2.5 | 2.5 | 2.5 |
| | | Irg369 | - | - | - | - | 1.0 | - | 1.0 | - | - | - | - | - | - | - | - | - | - | - | - | - |
| | | Irg819 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 |
| | | TPO | - | - | - | - | - | - | - | - | 1.0 | 1.0 | 1.0 | 1.0 | 1.0 | 1.0 | 1.0 | 1.0 | - | - | - | - |
| | | DETX | 1.10 | 0.8 | 3.2 | 3.0 | 4.6 | 6.5 | 2.8 | 2.6 | 0.3 | 0.5 | 0.5 | 0.2 | 3.2 | 4.3 | 2.7 | 2.8 | 0.5 | 0.3 | 2.6 | 3.7 |
| | | ITX | - | - | - | - | - | - | - | - | - | - | - | - | - | - | - | - | - | - | - | - |
| Additive | | ST-1 | 0.30 | 0.30 | 0.30 | 0.30 | 0.30 | 0.30 | 0.30 | 0.30 | 0.30 | 0.30 | 0.30 | 0.30 | 0.30 | 0.30 | 0.30 | 0.30 | 0.30 | 0.30 | 0.30 | 0.30 |
| | | Tinuvin 770DF | 0.30 | 0.30 | 0.30 | 0.30 | 0.30 | 0.30 | 0.30 | 0.30 | 0.30 | 0.30 | 0.30 | 0.30 | 0.30 | 0.30 | 0.30 | 0.30 | 0.30 | 0.30 | 0.30 | 0.30 |
| Total | | | 100.0<br>0 | 100.0<br>0 | 100.0<br>0 | 100.0<br>0 | 100.0<br>0 | 100.0<br>0 | 100.0<br>0 | 100.0<br>0 | 100.0<br>0 | 100.0<br>0 | 100.0<br>0 | 100.0<br>0 | 100.0<br>0 | 100.0<br>0 | 100.0<br>0 | 100.0<br>0 | 100.0<br>0 | 100.0<br>0 | 100.0<br>0 | 100.0<br>0 |
| Thioxanthone-based polymerization initiator/pigment (ratio by weight) | | | 0.24 | 0.89 | 1.19 | 8.33 | 1.02 | 10.83 | 1.04 | 8.67 | 0.10 | 0.83 | 0.24 | 0.67 | 1.09 | 8.96 | 1.29 | 9.33 | 0.21 | 0.77 | 1.02 | 8.22 |
| Evaluation results | | Curing sensitivity | Fair | Poor | Exc. | Exc. | Exc. | Exc. | Exc. | Exc. | Poor | Fair | Poor | Poor | Exc. | Exc. | Exc. | Exc. | Poor | Fair | Exc. | Exc. |
| | | Adhesion | Poor | Poor | Poor | Poor | Poor | Poor | Poor | Poor | Poor | Poor | Poor | c | Poor | Poor | Good | Poor | Good | Good | Good | Good |
| | | Hue | A | A | C | C | D | D | C | C | A | A | A | A | C | D | C | C | A | A | C | C |
| | | Graininess | B | | C | | C | | C | | B | | B | | D | | D | | A | | D | |

## Claims

1. An ink set for inkjet recording comprising at least one dark color ink composition and light color ink composition pair having the same hue, the dark color ink composition and the light color ink composition all comprising (Component A) a pigment, (Component B) a radically polymerizable compound, and (Component C-1) a thioxanthone-based polymerization initiator, the dark color ink composition and the light color ink composition all comprising as the radically polymerizable compound an aromatic hydrocarbon group-containing monofunctional (meth)acrylate compound, the ratio by weight of the pigment and the thioxanthone-based polymerization initiator in the dark color ink composition being 4:1 to 1:1, and the ratio by weight of the pigment and the thioxanthone-based polymerization initiator in the light color ink composition being 1:1 to 1:8.

2. The ink set for inkjet recording according to Claim 1, wherein the dark color ink composition has a color selected from the group consisting of yellow, cyan, magenta, black, and white, and the light color ink composition having the same hue has a color of cyan and/or magenta.

3. The ink set for inkjet recording according to Claim 1 or 2, wherein the pigment in the light color ink composition has a content of no greater than 1 wt%.

4. The ink set for inkjet recording according to any one of Claims 1 to 3, wherein the dark color ink composition and the light color ink composition all comprise, as the polymerization initiator (Component C), (Component C-1) a thioxanthone-based polymerization initiator, (Component C-2) an $\alpha$-aminoalkylphenone compound, and (Component C-3) an acylphosphine oxide compound, the contents (c1), (c2), and (c3) of Component C-1, Component C-2, and Component C-3 in the ink composition satisfying (c1) $\leq$ (c2) + (c3).

5. The ink set for inkjet recording according to any one of Claims 1 to 4, wherein the dark color ink composition and the light color ink composition all comprise as the radically polymerizable compound an N-vinylcaprolactam at at least 10 wt% of the entire ink composition.

6. The ink set for inkjet recording according to any one of Claims 1 to 5, wherein the dark color ink composition and the light color ink composition all comprise as the radically polymerizable compound a compound represented by Formula (b-3) below,

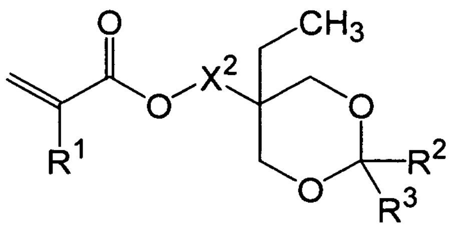

(b - 3)

wherein $R^1$, $R^2$, and $R^3$ independently denote a hydrogen atom, a methyl group, or an ethyl group, and $X^2$ denotes a single bond or a divalent linking group.

7. The ink set for inkjet recording according to any one of Claims 1 to 6, wherein the content of the pigment in the light color ink composition is 1 to 80 wt% relative to the content of the pigment in the dark color ink composition having the same hue.

8. The ink set for inkjet recording according to Claim 1, wherein the contents of the aromatic hydrocarbon group-containing monofunctional (meth)acrylate compound in the dark color ink composition and the light color ink composition are 15 to 40 wt% relative to the entire ink composition.

9. The ink set for inkjet recording according to Claim 6, wherein the contents of the compound represented by Formula (b-3) in the dark color composition and the light color ink composition are 2 to 20 wt% relative to the entire ink

composition.

**10.** The ink set for inkjet recording according to Claim 1, wherein the content of the thioxanthone-based polymerization initiator in the dark color ink composition is 0.5 to 4.0 wt% relative to the entire ink composition.

**11.** The ink set for inkjet recording according to Claim 1, wherein the content of the thioxanthone-based polymerization initiator in the light color ink composition is 0.1 to 3 wt% relative to the entire ink composition.

**12.** An inkjet recording method comprising
a step of discharging onto a recording medium an ink composition constituting the ink set for inkjet recording according to any one of Claims 1 to 11, and
a step of curing the ink composition by irradiating the discharged ink composition with actinic radiation using a UV light-emitting diode.

**13.** The inkjet recording method according to Claim 12, wherein the UV light-emitting diode has an emission peak wavelength in the range of 380 to 420 nm and has a maximum illumination intensity on the recording medium surface of 10 to 2,000 $mW/cm^2$.

**14.** A printed material recorded by the inkjet recording method according to Claim 12 or 13.

**15.** Use of the ink set of any one of Claims 1 to 11 as an ink set for inkjet recording.

**Patentansprüche**

**1.** Tintenset für die Tintenstrahlaufzeichnung, umfassend
mindestens ein Paar einer Tintenzusammensetzung mit dunkler Farbe und einer Tintenzusammensetzung mit heller Farbe, die den gleichen Farbton aufweisen,
wobei die Tintenzusammensetzung mit dunkler Farbe und die Tintenzusammensetzung mit heller Farbe beide (Komponente A) ein Pigment, (Komponente B) eine radikalisch polymerisierbare Verbindung und (Komponente C-1) einen auf Thioxanthon basierenden Polymerisationsinitiator umfassen,
worin die Tintenzusammensetzung mit dunkler Farbe und die Tintenzusammensetzung mit heller Farbe beide als radikalisch polymerisierbare Verbindung eine aromatische Kohlenwasserstoffgruppe-haltige monofunktionelle (Meth)acrylatverbindung umfassen,
worin das Gewichtsverhältnis des Pigments und des auf Thioxanthon basierenden Polymerisationsinitiators in der Tintenzusammensetzung mit dunkler Farbe von 4:1 bis 1:1 beträgt und
das Gewichtsverhältnis des Pigments und des auf Thioxanthon basierenden Polymerisationsinitiators in der Tintenzusammensetzung mit heller Farbe von 1:1 bis 1:8 beträgt.

**2.** Tintenset für die Tintenstrahlaufzeichnung gemäß Anspruch 1, worin die Tintenzusammensetzung mit dunkler Farbe eine Farbe aufweist, die aus der Gruppe ausgewählt ist, bestehend aus gelb, cyan, magenta, schwarz und weiß, und die Tintenzusammensetzung mit heller Farbe, die den gleichen Farbton aufweist, eine Farbe von cyan und/oder magenta aufweist.

**3.** Tintenset für die Tintenstrahlaufzeichnung gemäß Anspruch 1 oder 2, worin das Pigment in der Tintenzusammensetzung mit heller Farbe einen Mengenanteil von nicht größer als 1 Gew.% aufweist.

**4.** Tintenset für die Tintenstrahlaufzeichnung gemäß irgendeinem der Ansprüche 1 bis 3, worin die Tintenzusammensetzung mit dunkler Farbe und die Tintenzusammensetzung mit heller Farbe beide als Polymerisationsinitiator (Komponente C),
(Komponente C-1) einen auf Thioxanthon basierenden Polymerisationsinitiator,
(Komponente C-2) eine $\alpha$-Aminoalkylphenonverbindung und
(Komponente C-3) eine Acylphosphinoxidverbindung
umfassen, worin die Mengenanteile (c1), (c2) und (c3) der Komponente C-1, der Komponente C-2 und der Komponente C-3 in der Tintenzusammensetzung die Beziehung $(c1) \leq (c2) + (c3)$ erfüllen.

**5.** Tintenset für die Tintenstrahlaufzeichnung gemäß irgendeinem der Ansprüche 1 bis 4, worin die Tintenzusammensetzung mit dunkler Farbe und die Tintenzusammensetzung mit heller Farbe beide als radikalisch polymerisierbare

Verbindung ein N-Vinylcaprolactam in einer Menge von mindestens 10 Gew.% der gesamten Tintenzusammensetzung umfassen.

6. Tintenset für die Tintenstrahlaufzeichnung gemäß irgendeinem der Ansprüche 1 bis 5, worin die Tintenzusammensetzung mit dunkler Farbe und die Tintenzusammensetzung mit heller Farbe beide als radikalisch polymerisierbare Verbindung eine durch die nachstehende Formel (b-3) dargestellte Verbindung umfassen:

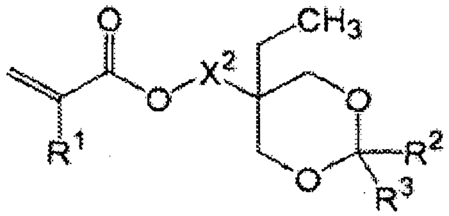

(b-3)

worin $R^1$, $R^2$ und $R^3$ unabhängig ein Wasserstoffatom, eine Methylgruppe oder eine Ethylgruppe bezeichnen und $X^2$ eine Einfachbindung oder eine divalente Verknüpfungsgruppe bezeichnet.

7. Tintenset für die Tintenstrahlaufzeichnung gemäß irgendeinem der Ansprüche 1 bis 6, worin der Mengenanteil des Pigments in der Tintenzusammensetzung mit heller Farbe von 1 bis 80 Gew.% beträgt, relativ zum Mengenanteil des Pigments in der Tintenzusammensetzung mit dunkler Farbe, die den gleichen Farbton aufweist.

8. Tintenset für die Tintenstrahlaufzeichnung gemäß Anspruch 1, worin die Mengenanteile der aromatische Kohlenwasserstoffgruppe-haltigen monofunktionellen (Meth)acrylatverbindung in der Tintenzusammensetzung mit dunkler Farbe und in der Tintenzusammensetzung mit heller Farbe 15 bis 40 Gew.% betragen, relativ zur gesamten Tintenzusammensetzung.

9. Tintenset für die Tintenstrahlaufzeichnung gemäß Anspruch 6, worin die Mengenanteile der durch die Formel (b-3) dargestellten Verbindung in der Tintenzusammensetzung mit dunkler Farbe und der Tintenzusammensetzung mit heller Farbe 2 bis 20 Gew.% betragen, relativ zu der gesamten Tintenzusammensetzung.

10. Tintenset für die Tintenstrahlaufzeichnung gemäß Anspruch 1, worin der Mengenanteil des auf Thioxanthon basierenden Polymerisationsinitiators in der Tintenzusammensetzung dunkler Farbe 0,5 bis 4,0 Gew.% beträgt, relativ zur gesamten Tintenzusammensetzung.

11. Tintenset für die Tintenstrahlaufzeichnung gemäß Anspruch 1, worin der Mengenanteil des auf Thioxanthon basierenden Polymerisationsinitiators in der Tintenzusammensetzung heller Farbe 0,1 bis 3 Gew.% beträgt, relativ zur gesamten Tintenzusammensetzung.

12. Tintenstrahlaufzeichnungsverfahren, umfassend
einen Schritt zum Ausstoßen einer Tintenzusammensetzung, die das Tintenset für die Tintenstrahlaufzeichnung gemäß irgendeinem der Ansprüche 1 bis 11 aufbaut, auf ein Aufzeichnungsmedium und
einen Schritt zum Härten der Tintenzusammensetzung durch Bestrahlen der ausgestoßenen Tintenzusammensetzung mit aktinischer Strahlung unter Verwendung einer UV-Lichtemittierenden Diode.

13. Tintenstrahlaufzeichnungsverfahren gemäß Anspruch 12, worin die UV-Licht-emittierende Diode eine Emissionspeakwellenlänge im Bereich von 380 bis 420 nm aufweist und eine maximale Beleuchtungsintensität auf der Oberfläche des Aufzeichnungsmediums von 10 bis 2.000 $mW/cm^2$ erreicht.

14. Gedrucktes Material, aufzeichnet mit dem Tintenstrahlaufzeichnungsverfahren gemäß Anspruch 12 oder 13.

15. Verwendung des Tintensets gemäß irgendeinem der Ansprüche 1 bis 11 als Tintenset für die Tintenstrahlaufzeichnung.

## Revendications

1. Jeu d'encres pour enregistrement à jet d'encre comprenant

au moins un couple de composition d'encre de couleur sombre et de composition d'encre de couleur claire ayant la même nuance,
la composition d'encre de couleur sombre et la composition d'encre de couleur claire comprenant toutes les deux un pigment (Composant A), un composé pouvant être polymérisé par radicaux (Composant B), et un initiateur de polymérisation à base de thioxanthone (Composant C-1),
la composition d'encre de couleur sombre et la composition d'encre de couleur claire comprenant toutes les deux en tant que composé pouvant être polymérisé par radicaux un composé de (méth)acrylate monofonctionnel contenant un groupe hydrocarbure aromatique,
le rapport pondéral du pigment et de l'initiateur de polymérisation à base de thioxanthone dans la composition d'encre de couleur sombre étant de 4:1 à 1:1, et
le rapport pondéral du pigment et de l'initiateur de polymérisation à base de thioxanthone dans la composition d'encre de couleur claire étant de 1:1 à 1:8.

2. Jeu d'encres pour enregistrement à jet d'encre selon la revendication 1, dans lequel la composition d'encre de couleur sombre a une couleur sélectionnée à partir du groupe consistant en jaune, cyan, magenta, noir et blanc, et la composition d'encre de couleur claire ayant la même nuance a une couleur cyan et/ou magenta.

3. Jeu d'encres pour enregistrement à jet d'encre selon la revendication 1 ou 2, dans lequel le pigment dans la composition d'encre de couleur claire a une teneur non supérieure à 1 % en poids.

4. Jeu d'encres pour enregistrement à jet d'encre selon l'une quelconque des revendications 1 à 3, dans lequel la composition d'encre de couleur sombre et la composition d'encre de couleur claire comprennent toutes les deux, en tant qu'initiateur de polymérisation (Composant C),
un initiateur de polymérisation à base de thioxanthone (Composant C-1),
un composé d'$\alpha$-amino-alkylphénone (Composant C-2), et
un composé d'oxyde d'acylphosphine (Composant C-3),
les teneurs (c1), (c2) et (c3) des Composant C-1, Composant C-2 et Composant C-3 dans la composition d'encre satisfaisant à $(c1) \leq (c2) + (c3)$.

5. Jeu d'encres pour enregistrement à jet d'encre selon l'une quelconque des revendications 1 à 4, dans lequel la composition d'encre de couleur sombre et la composition d'encre de couleur claire comprennent toutes les deux en tant que composé pouvant être polymérisé par radicaux un N-vinylcaprolactame à au moins 10 % en poids de la totalité de la composition d'encre.

6. Jeu d'encres pour enregistrement à jet d'encre selon l'une quelconque des revendications 1 à 5, dans lequel la composition d'encre de couleur sombre et la composition d'encre de couleur claire comprennent toutes les deux en tant que composé pouvant être polymérisé par radicaux un composé représenté par la Formule (b-3) ci-dessous,

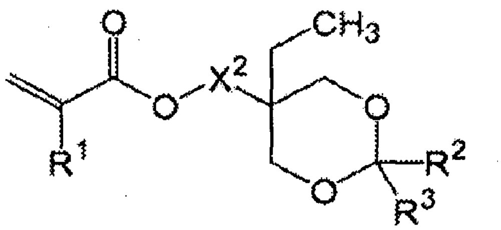

(b-3)

dans lequel $R^1$, $R^2$ et $R^3$ désignent indépendamment un atome d'hydrogène, un groupe méthyle, ou un groupe éthyle, et $X^2$ désigne une liaison simple ou un groupe de liaison divalent.

7. Jeu d'encres pour enregistrement à jet d'encre selon l'une quelconque des revendications 1 à 6, dans lequel la teneur du pigment dans la composition d'encre de couleur claire est de 1 à 80 % en poids par rapport à la teneur du pigment dans la composition d'encre de couleur sombre ayant la même nuance.

8. Jeu d'encres pour enregistrement à jet d'encre selon la revendication 1, dans lequel les teneurs du composé de (méth)acrylate monofonctionnel contenant un groupe hydrocarbure aromatique dans la composition d'encre de couleur sombre et la composition d'encre de couleur claire sont de 15 à 40 % en poids par rapport à la totalité de la composition d'encre.

**9.** Jeu d'encres pour enregistrement à jet d'encre selon la revendication 6, dans lequel les teneurs du composé représenté par la Formule (b-3) dans la composition de couleur sombre et la composition d'encre de couleur claire sont de 2 à 20 % en poids par rapport à la totalité de la composition d'encre.

**10.** Jeu d'encres pour enregistrement à jet d'encre selon la revendication 1, dans lequel la teneur de l'initiateur de polymérisation à base de thioxanthone dans la composition d'encre de couleur sombre est de 0,5 à 4 % en poids par rapport à la totalité de la composition d'encre.

**11.** Jeu d'encres pour enregistrement à jet d'encre selon la revendication 1, dans lequel la teneur de l'initiateur de polymérisation à base de thioxanthone dans la composition d'encre de couleur claire est de 0,1 à 3 % en poids par rapport à la totalité de la composition d'encre.

**12.** Procédé d'enregistrement à jet d'encre comprenant
une étape de déchargement sur un support d'enregistrement d'une composition d'encre constituant le jeu d'encres pour enregistrement à jet d'encre selon l'une quelconque des revendications 1 à 11, et
une étape de durcissement de la composition d'encre en irradiant la composition d'encre déchargée avec un rayonnement actinique en utilisant une diode émettant une lumière UV.

**13.** Procédé d'enregistrement à jet d'encre selon la revendication 12, dans lequel la diode émettant une lumière UV a une longueur d'onde de pic d'émission dans la plage de 380 à 420 nm et a une intensité d'éclairage maximale sur la surface de support d'enregistrement de 10 à 2 000 $mW/cm^2$.

**14.** Matière imprimée enregistrée par le procédé d'enregistrement à jet d'encre selon la revendication 12 ou 13.

**15.** Utilisation du jeu d'encres selon l'une quelconque des revendications 1 à 11 en tant que jeu d'encres pour enregistrement à jet d'encre.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008208190 A
- JP 2009096985 A
- JP 2009 A
- JP 096985 A
- JP 2009185186 A
- JP 2010126644 A
- US 7011396 B
- US 20090290000 A
- US 20100141709 A
- JP 60132767 A
- WO 9954415 A